(19) Europäisches Patentamt
European Patent Office
Office européen des brevets

(11) EP 3 950 894 A1

(12) EUROPEAN PATENT APPLICATION
published in accordance with Art. 153(4) EPC

(43) Date of publication:
**09.02.2022 Bulletin 2022/06**

(21) Application number: **19920931.3**

(22) Date of filing: **26.03.2019**

(51) International Patent Classification (IPC):
***C10M 107/02*** (2006.01) ***C10M 161/00*** (2006.01)
***C10M 169/04*** (2006.01) ***C10M 101/02*** (2006.01)
***C10M 105/32*** (2006.01) ***C10M 135/20*** (2006.01)
***C10M 143/00*** (2006.01) ***C10N 20/00*** (2006.01)
***C10N 20/02*** (2006.01) ***C10N 30/02*** (2006.01)
***C10N 30/06*** (2006.01) ***C10N 40/04*** (2006.01)

(52) Cooperative Patent Classification (CPC):
**C10M 107/02; C10M 161/00; C10M 169/04;**
C10M 101/02; C10M 105/32; C10M 135/20;
C10M 143/00

(86) International application number:
**PCT/JP2019/012997**

(87) International publication number:
**WO 2020/194542 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mitsui Chemicals, Inc.**
**Tokyo 105-7122 (JP)**

(72) Inventor: **ABE Shota**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

# (54) LUBRICATION OIL COMPOSITION AND METHOD FOR PRODUCING SAME

(57) The present invention is a lubrication oil composition which is characterized by containing (A) a liquid random copolymer of ethylene and an α-olefin, which is produced by a specific method and (F) a sulfur-containing compound wherein at least one hydrocarbon group that is adjacent to a sulfur atom is a secondary or tertiary hydrocarbon group, while containing, as an optional component, (G) a polymer of an α-olefin having 3 to 6 carbon atoms, and which is also characterized in that: the kinematic viscosity at 40°C is 450 to 51,000 $mm^2/s$; the content of sulfur is 0.1 to 5 parts by weight; and the content of the component (G) is 0 to 15 parts by weight. This lubrication oil composition is especially suitable for gear oils and the like.

EP 3 950 894 A1

## Description

TECHNICAL FIELD

The present invention relates to a lubrication oil composition and a method for producing the same. More particularly, the present invention relates to a lubrication oil composition comprising specific components and mainly used for industrial machines and transportation machines, and a method for producing the same.

BACKGROUND ART

In recent years, environmental problems have been highlighted on a global scale, and as one of countermeasures, reduction of power consumption or fuel consumption in industrial machines or transportation machines is taken in factories or by transportation carriers, etc. As one means to solve the above problems, there has been required a much higher effect on power saving and fuel saving by various lubrication oils used for the above machines.

Lubrication oil products have a so-called temperature dependence of viscosity that the viscosity generally greatly varies as the temperature is changed. Since the working temperature of equipment using lubrication oil greatly varies in certain cases, the temperature dependence of the viscosity is considered to be preferably small. Then, for the purpose of reducing the temperature dependence of the viscosity, a certain polymer that is soluble in a lubrication base oil has been used as a viscosity modifier for lubrication oils. In recent years, an α-olefin polymer has been widely used as such a viscosity modifier, and in order to further improve a property balance of lubrication oil, a variety of further improvements have been made (patent literature 1).

Such viscosity index improvers as above are generally used for maintaining a proper viscosity at high temperatures. On the other hand, under such circumstances that energy saving and resource saving have been strongly considered to be part of reduction of environmental burden, a viscosity modifier, which holds down viscosity increase particularly at low temperatures (is excellent in low-temperature characteristics) and is excellent also in durability and thermal oxidation stability, has been desired recently. In general lubrication oil applications, in order to obtain excellent low-temperature characteristics, control of a concentration of a polymer contained to the lowest is advantageous also from the economical viewpoint, and therefore, use of a polymer having a molecular weight as high as possible is known. However, an α-olefin polymer having a high molecular weight tends to be disadvantageous in terms of shear stability.

Particularly in gear oil applications among industrial lubrication oil applications, high durability (shear stability) and thermal oxidation stability have been required, and performance given in consideration of a balance between durability and viscosity characteristics has been desired. Further, of various lubrication oils, gear oils are used under particularly severe conditions, so that requirements for higher performance and longer life are strong, and also with regard to an extreme pressure agent that is a component exerting influence on formation of a stable oil film, further improvement in performance is desired.

As lubrication base oils, mineral oils are classified into three ranks of Groups (I) to (III), and further, poly-α-olefins (PAO) are classified as Group (IV) and the others are classified as Group (V) by the API classification. In various automotive lubrication oil applications, in order to cope with higher performance required and reduction of environmental burden, a ratio of use of Group (II) and Group (III) mineral oils or synthetic oils such as poly-α-olefins has increased though Group (I) mineral oils have been hitherto widely used. On the other hand, also in the industrial lubrication oil applications, long life and high durability are desired, and the aforesaid Group (III) mineral oils or poly-α-olefins have been used. Particularly in the recent industrial gear oils, shear stability is strongly desired as a main parameter of durability. It is difficult to meet the shear stability required herein by the use of conventional viscosity modifiers of high molecular weight type, so that α-olefin polymers of relatively low molecular weight, such as polybutene, have been used. However, there is room for improvement in viscosity characteristics of polybutene, particularly in sufficient fluidity thereof at low temperatures, depending upon the use applications.

CITATION LIST

PATENT LITERATURE

Patent literature 1: WO 00/34420

SUMMARY OF INVENTION

TECHNICAL PROBLEM

The aforesaid extreme pressure agent is a component that chemically reacts with, for example, a material for

forming a frictional surface of a machine or the like and forms a pressure-resistant film on the frictional surface. Since the materials of such frictional surfaces are often metals, the extreme pressure agent tends to be a component of high polarity.

On the other hand, base oils of synthetic oils, such as poly-α-olefins, often have low polarity, and therefore, the industrial gear oil applications in which high viscosity is particularly required have faced a problem that such oils have bad compatibility with the extreme pressure agent of high polarity.

Accordingly, the problem to be solved by the present invention is to provide industrial lubrication oil, which is excellent in compatibility with an extreme pressure agent, is excellent in a balance between viscosity characteristics and shear stability and is excellent also in durability and thermal oxidation stability.

SOLUTION TO PROBLEM

Under such circumstances as above, the present inventors have earnestly studied, and as a result, they have found that the above problem can be solved by combining an ethylene/α-olefin copolymer produced using a specific catalyst, one or more synthetic oils and/or mineral oils having specific viscosity, viscosity index and pour point that are used when needed, and a base oil, with a specific extreme pressure agent. Thus, the present inventors have accomplished the present invention.

The specific embodiments of the present invention are as described below.

[1] A lubrication oil composition comprising

(A) a liquid random copolymer of ethylene and an α-olefin, which is produced by a method (α) below,
(F) a sulfur-containing compound wherein at least one hydrocarbon group being adjacent to sulfur is a secondary or tertiary hydrocarbon group, and
as an optional component, (G) a polymer of α-olefin having 3 to 6 carbon atoms,
having a kinematic viscosity at 40°C of 450 to 51,000 $mm^2/s$, and
having a sulfur content of 0.1 to 5 parts by weight
(with the proviso that the total amount of the lubrication oil composition is 100 parts by weight):

(Method (α))
a method (α) for producing a liquid random copolymer of ethylene and an α-olefin comprising a step of performing solution polymerization of ethylene and an α-olefin having 3 to 20 carbon atoms in a catalyst system comprising

(a) a bridged metallocene compound represented by the Formula 1 below, and
(b) at least one compound selected from the group consisting of

(i) organoaluminumoxy compounds, and
(ii) compounds that react with the bridged metallocene compounds to form ion pairs:

[Chem. 1]

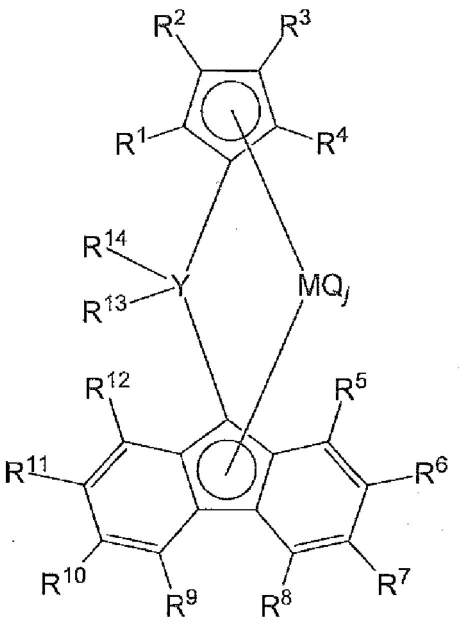

... (Formula 1)

[In Formula 1, $R^1$, $R^2$, $R^3$, $R^4$, $R^5$, $R^8$, $R^9$, and $R^{12}$ are respectively and independently a hydrogen atom, a hydrocarbon group, or a silicon-containing hydrocarbon group, and adjacent groups may be linked to each other to form a ring structure,

$R^6$ and $R^{11}$, being identical with each other, are hydrogen atoms, hydrocarbon groups, or silicon-containing hydrocarbon groups,
$R^7$ and $R^{10}$, being identical with each other, are hydrogen atoms, hydrocarbon groups, or silicon-containing hydrocarbon groups,
$R^6$ and $R^7$ may bind to hydrocarbon having 2 to 3 carbon atoms to form a ring structure,
$R^{11}$ and $R^{10}$ may bind to hydrocarbon having 2 to 3 carbon atoms to form a ring structure,
$R^6$, $R^7$, $R^{10}$, and $R^{11}$ are not hydrogen atoms simultaneously,
Y is a carbon atom or a silicon atom,
$R^{13}$ and $R^{14}$ are independently aryl groups,
M is Ti, Zr, or Hf,
Q is independently a halogen, a hydrocarbon group, an anionic ligand, or a neutral ligand that is capable of coordinating to a lone electron pair, and
j is an integer of 1 to 4].

[2] The lubrication oil composition described in [1], in which in the metallocene compound represented by the above Formula 1, at least one among substituents ($R^1$, $R^2$, $R^3$ and $R^4$) bonded to a cyclopentadienyl group, is a hydrocarbon group having 4 or more carbon atoms.
[3] The lubrication oil composition described in [1] or [2], in which $R^6$ and $R^{11}$, being the same, are hydrocarbon groups having 1 to 20 carbon atoms.
[4] The lubrication oil composition described in any one of [1] to [3], in which in the metallocene compound represented by the above Formula 1, a substituent ($R^2$ or $R^3$) bonded to the 3-position of the cyclopentadienyl group is a hydrocarbon group.
[5] The lubrication oil composition described in [4], in which in the metallocene compound represented by the above Formula 1, a hydrocarbon group ($R^2$ or $R^3$) bonded to the 3-position of the cyclopentadienyl group is an n-butyl group.
[6] The lubrication oil composition described in any one of [1] to [5], in which in the metallocene compound represented by the above Formula 1, substituents ($R^6$ and $R^{11}$) bonded to the 2-position and 7-position of the fluorenyl group are all tert-butyl groups.
[7] The lubrication oil composition described in any one of [1] to [6], in which the compound which reacts with the bridged metallocene compound to form ion pairs is a compound represented by the following Formula 6:

[Chem. 2]

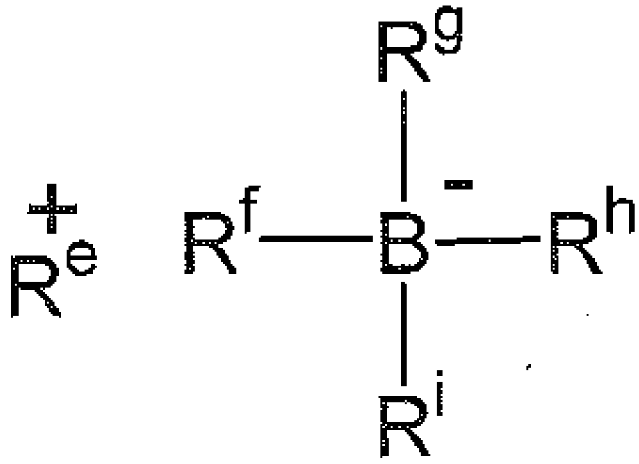

... (Formula 6)

[In Formula 6, $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ are respectively and independently a hydrocarbon group having 1 to 20 carbon atoms].

[8] The lubrication oil composition described in [7], in which the ammonium cation is a dimethylanilinium cation.

[9] The lubrication oil composition described in [7] or [8], in which the catalyst system further comprises an organoaluminum compound selected from a group consisting of trimethyl aluminum and triisobutyl aluminum.

[10] The lubrication oil composition described in any one of [1] to [9], which further comprises a component (B) satisfying all of the following requirements (B-1) to (B-3):

(B-1) a kinematic viscosity at 100°C is 3 to 120 $mm^2/s$,
(B-2) a viscosity index is not less than 90, and
(B-3) a pour point is not higher than -10°C.

[11] The lubrication oil composition described in [10], in which the component (B) is synthetic oil (C) satisfying all of the following requirements (C-1) to (C-3):

(C-1) a kinematic viscosity at 100°C is 20 to 120 $mm^2/s$,
(C-2) a viscosity index is not less than 120, and
(C-3) a pour point is not higher than -30°C.

[12] The lubrication oil composition described in [10], in which the component (B) is synthetic oil (D) satisfying all of the following requirements (D-1) to (D-3):

(D-1) a kinematic viscosity at 100°C is 3 to 10 $mm^2/s$,
(D-2) a viscosity index is not less than 120, and
(D-3) a pour point is not higher than -40°C.

[13] The lubrication oil composition described in [10], in which the component (B) is mineral oil (E) satisfying all of the following requirements (E-1) to (E-3):

(E-1) a kinematic viscosity at 100°C is 3 to 40 $mm^2/s$,
(E-2) a viscosity index is not less than 90, and
(E-3) a pour point is not higher than -10°C.

[14] The lubrication oil composition described in [11] or [12], in which the component (C) and/or the component (D) is synthetic oil comprising a polymer of α-olefin having 8 to 20 carbon atoms and/or an ester compound.

[15] The lubrication oil composition described in [13], in which the component (E) is one or more mineral oils selected from Groups (I), (II) and (III) of the API classification.

[16] The lubrication oil composition described in [10], in which the component (B) is one or more selected from

synthetic oil (C) satisfying all of the following requirements (C-1) to (C-3), synthetic oil (D) satisfying all of the following requirements (D-1) to (D-3), and mineral oil (E) satisfying all of the following requirements (E-1) to (E-3), and the saturated hydrocarbon content relative to the entirety of the components (A) to (E) is not less than 80% by weight:

(C-1) a kinematic viscosity at 100°C is 20 to 120 $mm^2/s$,
(C-2) a viscosity index is not less than 120,
(C-3) a pour point is not higher than -30°C
(D-1) a kinematic viscosity at 100°C is 3 to 10 $mm^2/s$,
(D-2) a viscosity index is not less than 120,
(D-3) a pour point is not higher than -40°C
(E-1) a kinematic viscosity at 100°C is 3 to 40 $mm^2/s$,
(E-2) a viscosity index is not less than 90, and
(E-3) a pour point is not higher than -10°C.

[17] A Lubrication oil composition comprising:
a liquid random copolymer of ethylene and an α-olefin satisfying all of the following requirements (A-1) to (A-5):

(A-1) comprising 40 to 60% by mol of an ethylene unit, and 60 to 40% by mol of an α-olefin unit having 3 to 20 carbon atoms,
(A-2) having a number average molecular weight (Mn) measured by gel permeation chromatography (GPC) of 500 to 10,000, and a molecular weight distribution (Mw/Mn, Mw means a weight average molecular weight) of 3 or less,
(A-3) having a kinematic viscosity at 100°C of 30 to 5,000 $mm^2/s$,
(A-4) having a pour point of 30 to -45°C, and
(A-5) having a bromine value of not higher than 0.1 g/100 g,
(F) a sulfur-containing compound in which at least one hydrocarbon group adjacent to sulfur is a secondary or tertiary hydrocarbon group, and
as an optional component, (G) a polymer of α-olefin having 3 to 6 carbon atoms,
and having a kinematic viscosity at 40°C of 962 to 4,570 $mm^2/s$, and
a sulfur content of 0.1 to 5 parts by weight [0015]
(with the proviso that the total amount of the lubrication oil composition is 100 parts by weight).

[18] The lubrication oil composition described in any one of [1] to [17], which is a gear oil composition.
[19] A method for producing a lubrication oil composition comprising:

a step of producing (A) a liquid random copolymer of ethylene and an α-olefin by a method (α) below, and
a step of mixing (A) the liquid random copolymer, (F) a sulfur-containing compound in which at least one hydrocarbon group adjacent to sulfur is a secondary or tertiary hydrocarbon group, (B) a component (B) satisfying all of the following requirements (B-1) to (B-3), and as an optional component, (G) a polymer of α-olefin having 3 to 6 carbon atoms to give a lubrication oil composition having a kinematic viscosity at 40°C of 450 to 51,000 $mm^2/s$ and a sulfur content of 0.1 to 5 parts by weight:

(Method (α))
a method (α) for producing a liquid random copolymer of ethylene and an α-olefin, comprising a step of performing solution polymerization of ethylene and an α-olefin having 3 to 20 carbon atoms in a catalyst system comprising

(a) a bridged metallocene compound represented by the Formula 1 below, and
(b) at least one compound selected from the group consisting of

(i) organoaluminumoxy compounds, and
(ii) compounds that react with the bridged metallocene compounds to form ion pairs:

[Chem. 3]

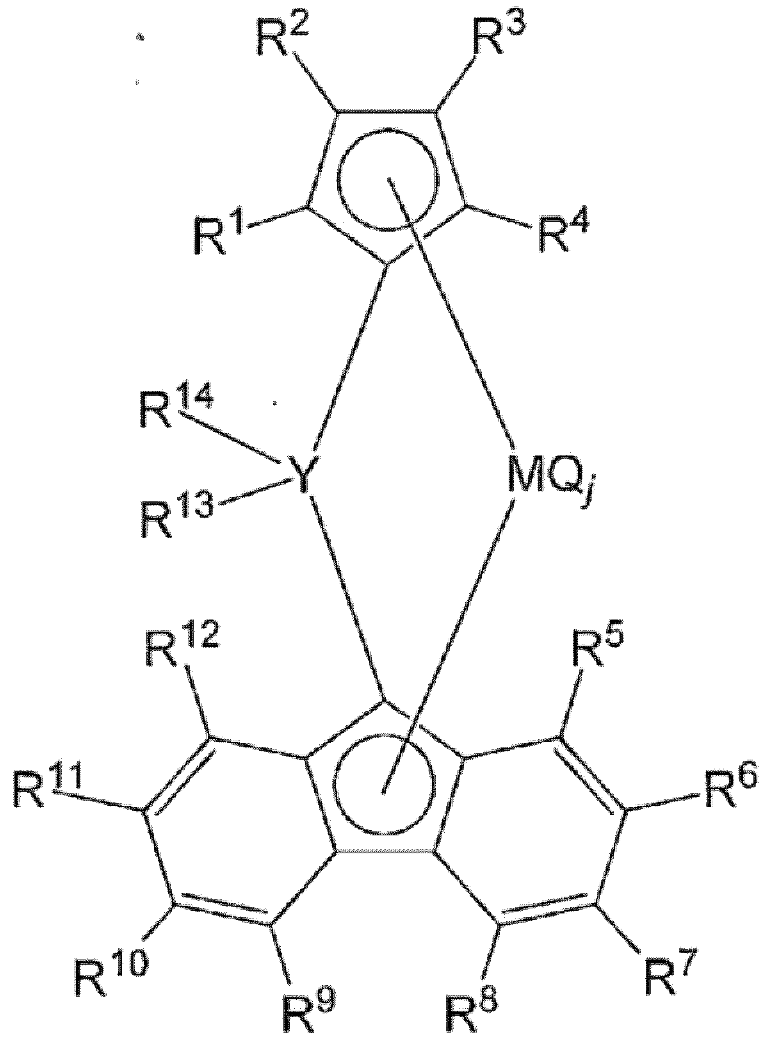

...(Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,

$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl groups;
M is Ti, Zr or Hf;
Q is independently halogen, hydrocarbon group, an anionic ligand or a neutral ligand which can be coordinated to a lone pair of electrons; and
j is an integer of 1 to 4.]

ADVANTAGEOUS EFFECTS OF INVENTION

The lubrication oil composition of the present invention is excellent in compatibility though it contains a sulfur

compound that is considered to be preferable as an extreme pressure agent, that is, the lubrication oil composition is in liquid form with excellent transparency and is excellent also in viscosity characteristics and shear stability. Therefore, this lubrication oil composition is a lubrication oil composition excellent in energy saving, resource saving, etc., and further in durability and thermal oxidation stability. On this account, the lubrication oil composition is preferable as industrial lubrication oil, particularly gear oil.

DESCRIPTION OF EMBODIMENTS

The lubrication oil composition according to the present invention is characterized by comprising a liquid random copolymer of ethylene and an α-olefin produced by the method (α) below (hereinafter referred to as "ethylene/α-olefin copolymer (A)" in the present description), and a sulfur compound (F) satisfying specific requirements. Each component is described below.

[Ethylene/α-olefin copolymer (A)]

An ethylene/α-olefin copolymer (A) in the present invention is a liquid random copolymer (A) of ethylene and an α-olefin produced by a method (α) below.

(Method (α))

a method (α) for producing a liquid random copolymer of ethylene and an α-olefin, comprising a step of performing solution polymerization of ethylene and an α-olefin having 3 to 20 carbon atoms in a catalyst system comprising:

(a) a bridged metallocene compound represented by the Formula 1 below, and
(b) at least one compound selected from the group consisting of

- (i) organoaluminumoxy compounds, and
- (ii) compounds that react with the bridged metallocene compounds to form ion pairs:

[Chem. 4]

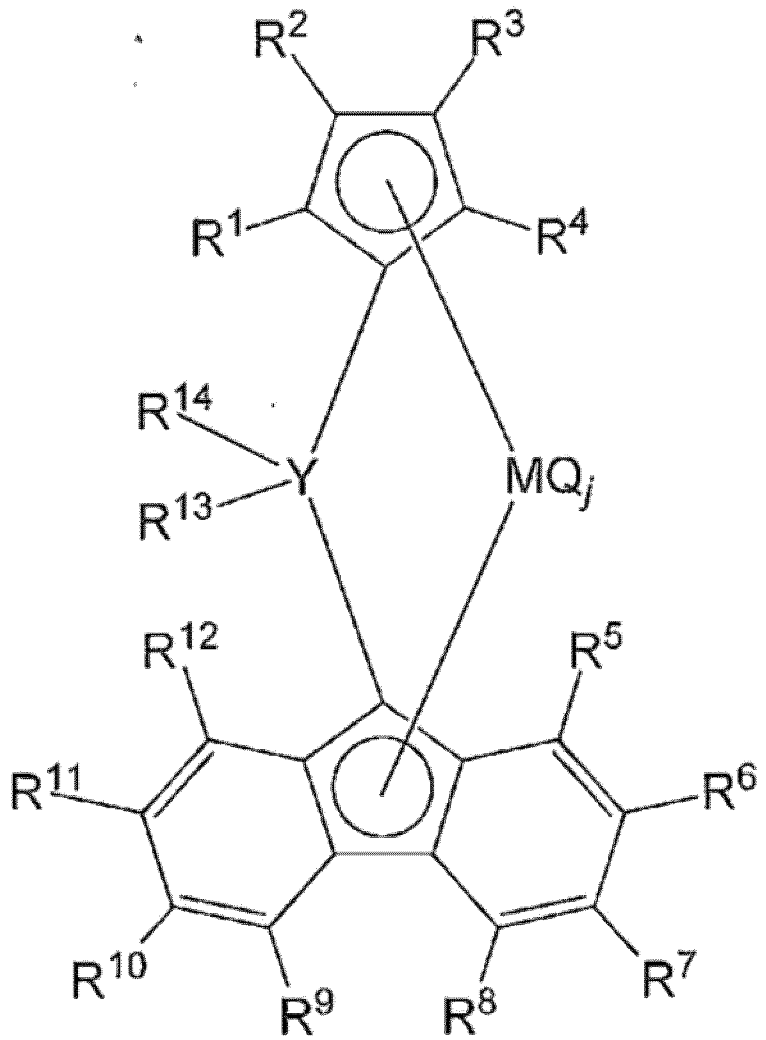

···(Formula 1)

[In Formula 1, $R^1$, $R^2$, $R^3$, $R^4$, $R^5$, $R^8$, $R^9$ and $R^{12}$ are respectively and independently hydrogen atom, hydrocarbon group or silicon-containing hydrocarbon group, and adjoining groups are optionally connected to each other to form a ring structure,
$R^6$ and $R^{11}$, being the same, are hydrogen atom, hydrocarbon group or silicon-containing hydrocarbon group,
$R^7$ and $R^{10}$, being the same, are hydrogen atom, hydrocarbon group or silicon-containing hydrocarbon group,
$R^6$ and $R^7$ are optionally connected to hydrocarbon having 2 to 3 carbon atoms to form a ring structure,
$R^{11}$ and $R^{10}$ are optionally connected to hydrocarbon having 2 to 3 carbon atoms to form a ring structure,
$R^6$, $R^7$, $R^{10}$ and $R^{11}$ are not hydrogen atom at the same time;
Y is a carbon atom or silicon atom;
$R^{13}$ and $R^{14}$ are independently aryl groups;
M is Ti, Zr or Hf;
Q is independently halogen, hydrocarbon group, an anionic ligand or a neutral ligand which can be coordinated to a lone pair of electrons; and
j is an integer of 1 to 4.]

Here, the hydrocarbon group has 1 to 20 carbon atoms, preferably 1 to 15 atoms, and more preferably 4 to 10 carbon atoms, and means for example an alkyl group, aryl group etc. The aryl group has 6 to 20 carbon atoms, and preferably 6 to 15 carbon atoms.

Examples of the silicon-containing hydrocarbon group include an alkyl or aryl group having 3 to 20 carbon

atoms which contains 1 to 4 silicon atoms, and in more detail includes trimethylsilyl group, tert-butyldimethylsilyl group, triphenylsilyl group etc.

In the bridged metallocene compound represented by Formula 1, cyclopentadienyl group may be substituted or unsubstituted.

In the bridged metallocene compound represented by Formula 1,

(i) it is preferable that at least one among substituents ($R^1$, $R^2$, $R^3$ and $R^4$) bonded to cyclopentadienyl group is a hydrocarbon group,
(ii) it is more preferable that at least one among substituents ($R^1$, $R^2$, $R^3$ and $R^4$) is a hydrocarbon group having 4 or more carbon atoms,
(iii) it is most preferable that substituent ($R^2$ or $R^3$) bonded to the 3-position of the cyclopentadienyl group is a hydrocarbon group having 4 or more carbon atoms (for example an n-butyl group).

In case where at least two among $R^1$, $R^2$, $R^3$ and $R^4$ are substituents (that is, being not hydrogen atom), the above-mentioned substituents may be the same or be different, and it is preferable that at least one substituent is a hydrocarbon group having 4 or more carbon atoms.

In the metallocene compound represented by Formula 1, $R^6$ and $R^{11}$ bonded to fluorenyl group are the same, $R^7$ and $R^{10}$ are the same, but $R^6$, $R^7$, $R^{10}$ and $R^{11}$ are not hydrogen atom at the same time. In high-temperature solution polymerization of poly-$\alpha$-olefin, in order to improve the polymerization activity, preferably neither $R^6$ nor $R^{11}$ is hydrogen atom, and more preferably none of $R^6$, $R^7$, $R^{10}$ and $R^{11}$ is hydrogen atom. For example, $R^6$ and $R^{11}$ bonded to the 2-position and 7-position of the fluorenyl group are the same hydrocarbon group having 1 to 20 carbon atoms, and preferably all tert-butyl groups, and $R^7$ and $R^{10}$ are the same hydrocarbon group having 1 to 20 carbon atoms, and preferably all tert-butyl groups.

The main chain part (bonding part, Y) connecting the cyclopentadienyl group and the fluorenyl group is a cross-linking section of two covalent bonds comprising one carbon atom or silicon atom, as a structural bridge section imparting steric rigidity to the bridged metallocene compound represented by Formula 1. Cross-linking atom (Y) in the cross-linking section has two aryl groups ($R^{13}$ and $R^{14}$) which may be the same or different. Therefore, the cyclopentadienyl group and the fluorenyl group are bonded by the covalent bond cross-linking section containing an aryl group. Examples of the aryl group include a phenyl group, naphthyl group, anthracenyl group, and a substituted aryl group (which is formed by substituting one or more aromatic hydrogen ($sp^2$-type hydrogen) of a phenyl group, naphthyl group or anthracenyl group, with substituents). Examples of substituents in the aryl group include a hydrocarbon group having 1 to 20 carbon atoms, a silicon-containing hydrocarbon group having 1 to 20 carbon atoms, a halogen atom etc., and preferably include a phenyl group. In the bridged metallocene compound represented by Formula 1, preferably $R^{13}$ and $R^{14}$ are the same in view of easy production.

In the bridged metallocene compound represented by Formula 1, Q is preferably a halogen atom or hydrocarbon group having 1 to 10 carbon atoms. The halogen atom includes fluorine, chlorine, bromine or iodine. The hydrocarbon group having 1 to 10 carbon atoms includes methyl, ethyl, n-propyl, isopropyl, 2-methylpropyl, 1,1-dimethylpropyl, 2,2-dimethylpropyl, 1,1-diethylpropyl, 1-ethyl-1-methylpropyl, 1,1,2,2-tetramethylpropyl, sec-butyl, tert-butyl, 1,1-dimethylbutyl, 1,1,3-trimethylbutyl, neopentyl, cyclohexyl methyl, cyclohexyl, 1-methyl-1-cyclohexyl etc. Further, when j is an integer of 2 or more, Q may be the same or different.

Examples of such bridged metallocene compounds (a) include:

ethylene [$\eta^5$-(3-tert-butyl-5-methyl cyclopentadienyl)] ($\eta^5$-fluorenyl) zirconium dichloride, ethylene [$\eta^5$-(3-tert-butyl-5-methyl cyclopentadienyl)] [$\eta^5$-(3,6-di-tert-butyl fluorenyl)] zirconium dichloride, ethylene [$\eta^5$-(3-tert-butyl-5-methyl cyclopentadienyl)] [$\eta^5$-(2,7-di-tert-butyl fluorenyl)] zirconium dichloride, ethylene [$\eta^5$-(3-tert-butyl-5-methyl cyclopentadienyl)] (octamethyl octahydrodibenzfluorenyl) zirconium dichloride, ethylene [$\eta^5$-(3-tert-butyl-5-methyl cyclopentadienyl)] (benzofluorenyl) zirconium dichloride, ethylene [$\eta^5$-(3-tert-butyl-5-methyl cyclopentadienyl)] (dibenzofluorenyl) zirconium dichloride, ethylene [$\eta^5$-(3-tert-butyl-5-methyl cyclopentadienyl)] (octahydrodibenzofluorenyl) zirconium dichloride, ethylene [$\eta^5$-(3-tert-butyl-5-methyl cyclopentadienyl)] [$\eta^5$-(2,7-diphenyl-3,6-di-tert-butyl fluorenyl)] zirconium dichloride, ethylene [$\eta^5$-(3-tert-butyl-5-methyl cyclopentadienyl)] [$\eta^5$-(2,7-dimethyl-3,6-di-tert-butyl fluorenyl)] zirconium dichloride;

ethylene [$\eta^5$-(3-tert-butyl cyclopentadienyl)] ($\eta^5$-fluorenyl) zirconium dichloride, ethylene [$\eta^5$-(3-tert-butyl cyclopentadienyl)] [$\eta^5$-(3,6-di-tert-butyl fluorenyl)] zirconium dichloride, ethylene [$\eta^5$-(3-tert-butyl cyclopentadienyl)] [$\eta^5$-(2,7-di-tert-butyl fluorenyl)] zirconium dichloride, ethylene [$\eta^5$-(3-tert-butyl cyclopentadienyl)] (octamethyl octahydrodibenzfluorenyl) zirconium dichloride, ethylene [$\eta^5$-(3-tert-butyl cyclopentadienyl)] (benzofluorenyl) zirconium dichloride, ethylene [$\eta^5$-(3-tert-butyl cyclopentadienyl)] (dibenzofluorenyl) zirconium dichloride, ethylene [$\eta^5$-(3-tert-butyl cyclopentadienyl)] (octahydrodibenzofluorenyl) zirconium dichloride, ethylene [$\eta^5$-(3-tert-butyl cyclopentadienyl)] [$\eta^5$-(2,7-diphenyl-3,6-di-tert-butyl fluorenyl)] zirconium dichloride, ethylene [$\eta^5$-(3-tert-butyl cyclopentadienyl)]

[$\eta^5$-(2,7-dimethyl-3,6-di-tert-butyl fluorenyl)] zirconium dichloride;

ethylene [$\eta^5$-(3-n-butyl cyclopentadienyl)] ($\eta^5$-fluorenyl) zirconium dichloride, ethylene [$\eta^5$-(3-n-butyl cyclopentadienyl)] [$\eta^5$-(3,6-di-tert-butyl fluorenyl)] zirconium dichloride, ethylene [$\eta^5$-(3-n-butyl cyclopentadienyl)] [$\eta^5$-(2,7-di-tert-butyl fluorenyl)] zirconium dichloride, ethylene [$\eta^5$-(3-n-butyl cyclopentadienyl)] (octamethyl octahydrodibenzfluorenyl) zirconium dichloride, ethylene [$\eta^5$-(3-n-butyl cyclopentadienyl)] (benzofluorenyl) zirconium dichloride, ethylene [$\eta^5$-(3-n-butyl cyclopentadienyl)] (dibenzofluorenyl) zirconium dichloride, ethylene [$\eta^5$-(3-n-butyl cyclopentadienyl)] (octahydrodibenzofluorenyl) zirconium dichloride, ethylene [$\eta^5$-(3-n-butyl cyclopentadienyl)] [$\eta^5$-(2,7-diphenyl-3,6-di-tert-butyl fluorenyl)] zirconium dichloride, ethylene [$\eta^5$-(3-n-butyl cyclopentadienyl)] [$\eta^5$-(2,7-dimethyl-3,6-di-tert-butyl fluorenyl)] zirconium dichloride;

diphenylmethylene [$\eta^5$-(3-tert-butyl-5-methyl cyclopentadienyl)] ($\eta^5$-fluorenyl) zirconium dichloride, diphenylmethylene [$\eta^5$-(3-tert-butyl-5-methyl cyclopentadienyl)] [$\eta^5$-(3,6-di-tert-butyl fluorenyl)] zirconium dichloride, diphenylmethylene [$\eta^5$-(3-tert-butyl-5-methyl cyclopentadienyl)] [$\eta^5$-(2,7-di-tert-butyl fluorenyl)] zirconium dichloride, diphenylmethylene [$\eta^5$-(3-tert-butyl-5-methyl cyclopentadienyl)] (octamethyl octahydrodibenzfluorenyl) zirconium dichloride, diphenylmethylene [$\eta^5$-(3-tert-butyl-5-methyl cyclopentadienyl)] (benzofluorenyl) zirconium dichloride, diphenylmethylene [$\eta^5$-(3-tert-butyl-5-methyl cyclopentadienyl)] (dibenzofluorenyl) zirconium dichloride, diphenylmethylene [$\eta^5$-(3-tert-butyl-5-methyl cyclopentadienyl)] (octahydrodibenzofluorenyl) zirconium dichloride, diphenylmethylene [$\eta^5$-(3-tert-butyl-5-methyl cyclopentadienyl)] [$\eta^5$-(2,7-diphenyl-3, 6-di-tert-butyl fluorenyl)] zirconium dichloride, diphenylmethylene [$\eta^5$-(3-tert-butyl-5-methyl cyclopentadienyl)] [$\eta^5$-(2,7-dimethyl-3,6-di-tert-butyl fluorenyl)] zirconium dichloride;

diphenylmethylene [$\eta^5$-(3-tert-butyl cyclopentadienyl)] ($\eta^5$-fluorenyl) zirconium dichloride, diphenylmethylene [$\eta^5$-(3-tert-butyl cyclopentadienyl)] [$\eta^5$-(3,6-di-tert-butyl fluorenyl)] zirconium dichloride, diphenylmethylene [$\eta^5$-(3-tert-butyl cyclopentadienyl)] [$\eta^5$-(2,7-di-tert-butyl fluorenyl)] zirconium dichloride, diphenylmethylene [$\eta^5$-(3-tert-butyl cyclopentadienyl)] (octamethyl octahydrodibenzfluorenyl) zirconium dichloride, diphenylmethylene [$\eta^5$-(3-tert-butyl cyclopentadienyl)] (benzofluorenyl) zirconium dichloride, diphenylmethylene [$\eta^5$-(3-tert-butyl cyclopentadienyl)] (dibenzofluorenyl) zirconium dichloride, diphenylmethylene [$\eta^5$-(3-tert-butyl cyclopentadienyl)] (octahydrodibenzofluorenyl) zirconium dichloride, diphenylmethylene [$\eta^5$-(3-tert-butyl cyclopentadienyl)] [$\eta^5$-(2,7-diphenyl-3,6-di-tert-butyl fluorenyl)] zirconium dichloride, diphenylmethylene [$\eta^5$-(3-tert-butyl cyclopentadienyl)] [$\eta^5$-(2,7-dimethyl-3,6-di-tert-butyl fluorenyl)] zirconium dichloride;

diphenylmethylene [$\eta^5$-(3-n-butyl cyclopentadienyl)] ($\eta^5$-fluorenyl) zirconium dichloride, diphenylmethylene [$\eta^5$-(3-n-butyl cyclopentadienyl)] [$\eta^5$-(3,6-di-tert-butyl fluorenyl)] zirconium dichloride, diphenylmethylene [$\eta^5$-(3-n-butyl cyclopentadienyl)] [$\eta^5$-(2,7-di-tert-butyl fluorenyl)] zirconium dichloride, diphenylmethylene [$\eta^5$-(3-n-butyl cyclopentadienyl)] (octamethyl octahydrodibenzfluorenyl) zirconium dichloride, diphenylmethylene [$\eta^5$-(3-n-butyl cyclopentadienyl)] (benzofluorenyl) zirconium dichloride, diphenylmethylene [$\eta^5$-(3-n-butyl cyclopentadienyl)] (dibenzofluorenyl) zirconium dichloride, diphenylmethylene [$\eta^5$-(3-n-butyl cyclopentadienyl)] (octahydrodibenzofluorenyl) zirconium dichloride, diphenylmethylene [$\eta^5$-(3-n-butyl cyclopentadienyl)] [$\eta^5$-(2,7-diphenyl-3,6-di-tert-butyl fluorenyl)] zirconium dichloride, diphenylmethylene [$\eta^5$-(3-n-butyl cyclopentadienyl)] [$\eta^5$-(2,7-dimethyl-3,6-di-tert-butyl fluorenyl)] zirconium dichloride;

di(p-tolyl) methylene [$\eta^5$-(3-tert-butyl-5-methyl cyclopentadienyl)] ($\eta^5$-fluorenyl) zirconium dichloride, di(p-tolyl) methylene [$\eta^5$-(3-tert-butyl-5-methyl cyclopentadienyl)] [$\eta^5$-(3,6-di-tert-butyl fluorenyl)] zirconium dichloride, di(p-tolyl) methylene [$\eta^5$-(3-tert-butyl-5-methyl cyclopentadienyl)] [$\eta^5$-(2,7-di-tert-butyl fluorenyl)] zirconium dichloride, di(p-tolyl) methylene [$\eta^5$-(3-tert-butyl-5-methyl cyclopentadienyl)] (octamethyl octahydrodibenzfluorenyl) zirconium dichloride, di(p-tolyl) methylene [$\eta^5$-(3-tert-butyl-5-methyl cyclopentadienyl)] (benzofluorenyl) zirconium dichloride, di(p-tolyl) methylene [$\eta^5$-(3-tert-butyl-5-methyl cyclopentadienyl)] (dibenzofluorenyl) zirconium dichloride, di(p-tolyl) methylene [$\eta^5$-(3-tert-butyl-5-methyl cyclopentadienyl)] (octahydrodibenzofluorenyl) zirconium dichloride, di(p-tolyl) methylene [$\eta^5$-(3-tert-butyl-5-methyl cyclopentadienyl)] [$\eta^5$-(2,7-diphenyl-3,6-di-tert-butyl fluorenyl)] zirconium dichloride, di(p-tolyl) methylene [$\eta^5$-(3-tert-butyl-5-methyl cyclopentadienyl)] [$\eta^5$-(2,7-dimethyl-3,6-di-tert-butyl fluorenyl)] zirconium dichloride;

di(p-tolyl) methylene [$\eta^5$-(3-tert-butyl cyclopentadienyl)] ($\eta^5$-fluorenyl) zirconium dichloride, di(p-tolyl) methylene [$\eta^5$-(3-tert-butyl cyclopentadienyl)] [$\eta^5$-(3,6-di-tert-butyl fluorenyl)] zirconium dichloride, di(p-tolyl) methylene [$\eta^5$-(3-tert-butyl cyclopentadienyl)] [$\eta^5$-(2,7-di-tert-butyl fluorenyl)] zirconium dichloride, di(p-tolyl) methylene [$\eta^5$-(3-tert-butyl cyclopentadienyl)] (octamethyl octahydrodibenzfluorenyl) zirconium dichloride, di(p-tolyl) methylene [$\eta^5$-(3-tert-butyl cyclopentadienyl)] (benzofluorenyl) zirconium dichloride, di(p-tolyl) methylene [$\eta^5$-(3-tert-butyl cyclopentadienyl)] (dibenzofluorenyl) zirconium dichloride, di(p-tolyl) methylene [$\eta^5$-(3-tert-butyl cyclopentadienyl)] (octahydrodibenzofluorenyl) zirconium dichloride, di(p-tolyl) methylene [$\eta^5$-(3-tert-butyl cyclopentadienyl)] [$\eta^5$-(2,7-diphenyl-3,6-di-tert-butyl fluorenyl)] zirconium dichloride, di(p-tolyl) methylene [$\eta^5$-(3-tert-butyl cyclopentadienyl)] [$\eta^5$-(2,7-dimethyl-3,6-di-tert-butyl fluorenyl)] zirconium dichloride; and

di(p-tolyl) methylene [$\eta^5$-(3-n-butyl cyclopentadienyl)] ($\eta^5$-fluorenyl) zirconium dichloride, di(p-tolyl) methylene [$\eta^5$-(3-n-butyl cyclopentadienyl)] [$\eta^5$-(3,6-di-tert-butyl fluorenyl)] zirconium dichloride, di(p-tolyl) methylene [$\eta^5$-(3-n-butyl

cyclopentadienyl)] [$\eta^5$- (2,7-di-tert-butyl fluorenyl)] zirconium dichloride, di(p-tolyl) methylene [$\eta^5$-(3-n-butyl cyclopentadienyl)] (octamethyl octahydrodibenzfluorenyl) zirconium dichloride, di(p-tolyl) methylene [$\eta^5$-(3-n-butyl cyclopentadienyl)] (benzofluorenyl) zirconium dichloride, di(p-tolyl) methylene [$\eta^5$-(3-n-butyl cyclopentadienyl)] (dibenzofluorenyl) zirconium dichloride, di(p-tolyl) methylene [$\eta^5$-(3-n-butyl cyclopentadienyl)] (octahydrodibenzofluorenyl) zirconium dichloride, di(p-tolyl) methylene [$\eta^5$-(3-n-butyl cyclopentadienyl)] [$\eta^5$-(2,7-diphenyl-3,6-di-tert-butyl fluorenyl) zirconium dichloride, di(p-tolyl) methylene [$\eta^5$-(3-n-butyl cyclopentadienyl)] [$\eta^5$-(2,7-dimethyl-3,6-di-tert-butyl fluorenyl)] zirconium dichloride.

Although compounds whose zirconium atoms were substituted with hafnium atoms, or compounds whose chloro ligands were substituted with methyl groups etc. are exemplified in these compounds, the bridged metallocene compound (a) is not limited to these exemplifications.

As the organoaluminum oxy-compound used in the catalyst system according to the present invention, conventional aluminoxane can be used. For example, linear or ring type aluminoxane represented by the following Formulas 2 to 5 can be used. A small amount of organic aluminum compound may be contained in the organoaluminum oxy-compound.

[Chem. 5]

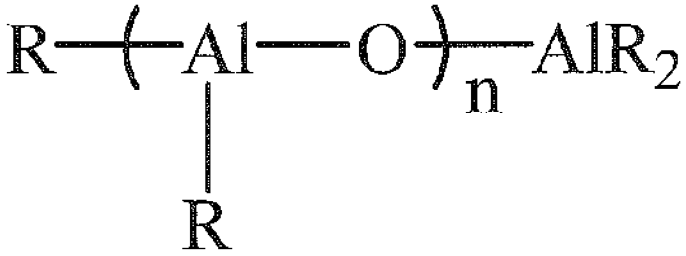

... (Formula 2)

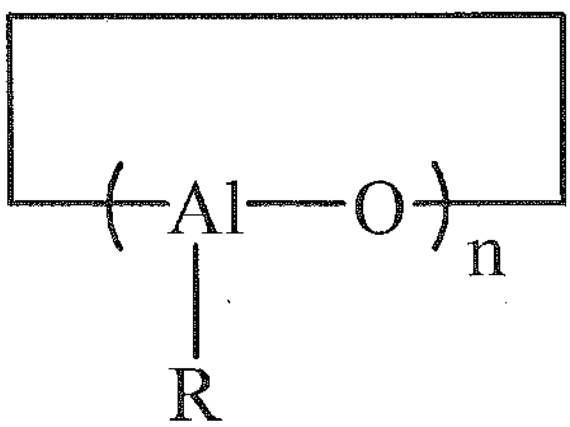

... (Formula 3)

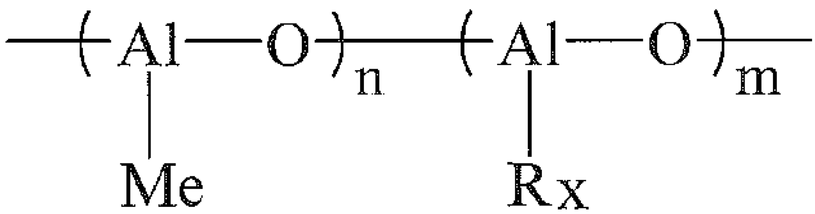

... (Formula 4)

In Formulae 2 to 4, R is independently a hydrocarbon group having 1 to 10 carbon atoms, Rx is independently a hydrocarbon group having 2 to 20 carbon atoms, m and n are independently an integer of 2 or more, preferably 3 or more, more preferably 10 to 70, and most preferably 10 to 50.

[Chem. 6]

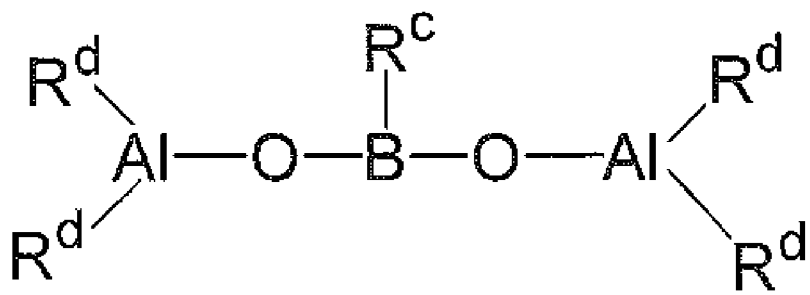

··· (Formula 5)

In Formula 5, $R^c$ is a hydrocarbon group having 1 to 10 carbon atoms, and $R^d$ is independently a hydrogen atom, halogen atom or hydrocarbon group having 1 to 10 carbon atoms.

In Formula 2 or Formula 3, R is a methyl group (Me) of the organoaluminum oxy-compound which is conventionally referred to as "methylaluminoxane".

The methylaluminoxane is easily available and has high polymerization activity, and thus it is commonly used as an activator in the polyolefin polymerization. However, the methylaluminoxane is difficult to dissolve in a saturated hydrocarbon, and thus it has been used as a solution of aromatic hydrocarbon such as toluene or benzene, which is environmentally undesirable. Therefore, in recent years, a flexible body of methylaluminoxane represented by Formula 4 has been developed and used as an aluminoxane dissolved in the saturated hydrocarbon. The modified methylaluminoxane represented by Formula 4 is prepared by using a trimethyl aluminum and an alkyl aluminum other than the trimethyl aluminum as shown in US Patent 4960878 and US Patent 5041584, and for example, is prepared by using trimethyl aluminum and triisobutyl aluminum. The aluminoxane in which Rx is an isobutyl group is commercially available under the trade name of MMAO and TMAO, in the form of a saturated hydrocarbon solution. (See Tosoh Finechem Corporation, Tosoh Research & Technology Review, Vol 47, 55 (2003)).

As (ii) the compound which reacts with the bridged metallocene compound to form ion pairs (hereinafter, referred to as "ionic compound" as required) which is contained in the present catalyst system, a Lewis acid, ionic compounds, borane, borane compounds and carborane compounds can be used. These are described in Korean Patent No. 10-551147, Japanese Unexamined Publication H01-501950, Japanese Unexamined Publication H03-179005, Japanese Unexamined Publication H03-179006, Japanese Unexamined Publication H03-207703, Japanese Unexamined Publication H03-207704, USP 5321106 and so on. If needed, heteropoly compounds, and isopoly compound etc. can be used, and the ionic compound disclosed in Japanese Unexamined Publication 2004-051676 can be used. The ionic compound may be used alone or by mixing two or more. In more detail, examples of the Lewis acid include the compound represented by $BR_3$ (R is fluoride, substituted or unsubstituted alkyl group having 1 to 20 carbon atoms (methyl group, etc.), substituted or unsubstituted aryl group having 6 to 20 carbon atoms (phenyl group, etc.), and also includes for example, trifluoro boron, triphenyl boron, tris(4-fluorophenyl) boron, tris(3,5-difluorophenyl) boron, tris(4-fluorophenyl) boron, tris(pentafluorophenyl) and boron tris(p-tolyl) boron. When the ionic compound is used, its use amount and sludge amount produced are relatively small in comparison with the organoaluminum oxy-compound, and thus it is economically advantageous. In the present invention, it is preferable that the compound represented by the following Formula 6 is used as the ionic compound.

[Chem. 7]

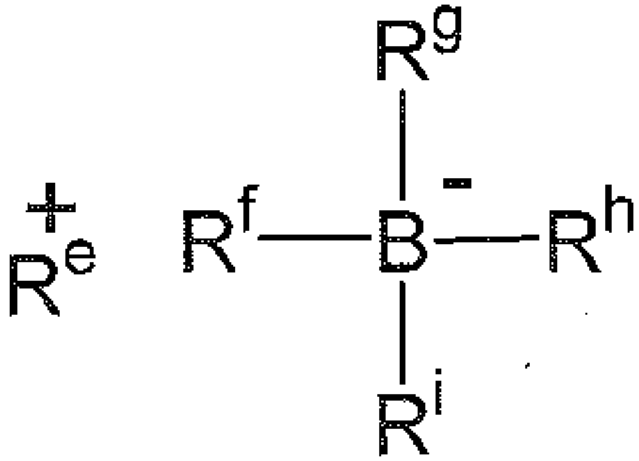

... (Formula 6)

In Formula 6, $R^{e+}$ is H+, a carbenium cation, an oxonium cation, an ammonium cation, a phosphonium cation, a cycloheptyltrienyl cation, or a ferrocenium cation having a transition metal, and $R^f$ to $R^i$ each is independently an organic group, preferably a hydrocarbon group having 1 to 20 carbon atoms, and more preferably an aryl group, for example, a penta-fluorophenyl group. Examples of the carbenium cation include a tris(methylphenyl)carbenium cation and a tris(dimethylphenyl)carbenium cation, and examples of the ammonium cation include a dimethylanilinium cation.

Examples of compounds represented by the aforementioned Formula 6 preferably include N,N-dialkyl anilinium salts, and specifically include N,N-dimethylanilinium tetraphenylborate, N,N-dimethylanilinium tetrakis (pentafluorophenyl) borate, N,N-dimethylanilinium tetrakis (3,5-ditrifluoro methylphenyl) borate, N,N-diethyl anilinium tetraphenylborate, N,N-diethyl anilinium tetrakis (pentafluorophenyl) borate, N,N-diethyl anilinium tetrakis (3,5-ditrifluoro methylphenyl) borate, N,N-2,4,6-penta methylanilinium tetraphenylborate, and N,N-2,4,6-penta methylanilinium tetrakis (pentafluorophenyl) borate.

The catalyst system used in the present invention further includes a (c) organoaluminum compound when it is needed. The organoaluminum compound plays a role of activating the bridged metallocene compound, the organoaluminum oxy-compound, and the ionic compound, etc. As the organoaluminum compound, preferably an organoaluminum represented by the following Formula 7, and alkyl complex compounds of the Group 1 metal and aluminum represented by the following Formula 8 can be used.

$R^a_mAl(OR^b)_nH_pX_q$ ... Formula 7

In Formula 7, $R^a$ and $R^b$ each is independently a hydrocarbon group having 1 to 15 carbon atoms, preferably 1 to 4 carbon atoms, and X is a halogen atom, m is an integer of $0<m\leq3$, n is an integer of $0\leq n\leq3$, p is an integer of $0<p\leq3$, q is an integer of $0\leq q<3$, and $m+n+p+q=3$.

$M^2AlR^a_4$ ... Formula 8

In Formula 8, $M^2$ represents Li, Na or K, and $R^a$ is a hydrocarbon group having 1 to 15 carbon atoms, and preferably 1 to 4 carbon atoms.

Examples of the organoaluminum compound represented by Formula 7 include trimethyl aluminum and triisobutyl aluminum etc., which are easily available. Examples of the alkyl complex compounds of Group 1 metal and aluminum represented by Formula 8 include $LiAl(C_2H_5)_4$, $LiAl(C_7H_{15})_4$ etc. Compounds similar to the compounds represented by Formula 7 can be used. For example, like $(C_2H_5)_2AlN(C_2H_5)Al(C_2H_5)_2$, an organoaluminum compound to which at least 2 aluminum compounds are bonded through nitrogen atoms, can be used.

In the method for preparing the ethylene-$\alpha$-olefin copolymer (C), the amount of (a) bridged metallocene compound represented by Formula 1 is preferably 5 to 50 weight% with respect to total catalyst composition. Moreover, preferably the amount of (b) (i) organoaluminum oxy-compound is 50 to 500 equivalent weight with respect to the molar number of the bridged metallocene compound to be used, the amount of (b) (ii) the compound which reacts with the bridged metallocene compound to form ion pairs is 1 to 5 equivalent weight with respect to the molar number of bridged metallocene compound to be used, and the amount of (c) organoaluminum compound is 5 to 100 equivalent weight with respect to the molar number of the bridged metallocene compound to be used.

The catalyst system used in the present invention may have the following [1] to [4] for example.

[1] (a) bridged metallocene compound represented by Formula 1, and (b) (i) organoaluminum oxy-compound.
[2] (a) bridged metallocene compound represented by Formula 1, (b) (i) organoaluminum oxy-compound and (c) organoaluminum compound.
[3] (a) bridged metallocene compound represented by Formula 1, (b) (ii) the compound which reacts with the bridged metallocene compound to form ion pairs, and (c) organoaluminum compound.
[4] (a) bridged metallocene compound represented by Formula 1, and (b) (i) organoaluminum oxy-compound and (ii) the compound which reacts with the bridged metallocene compound to form ion pairs.

The (a) bridged metallocene compound represented by Formula 1 (element (a)), (b) (i) organoaluminum oxy-compound (element (b)), (ii) compound which reacts with the bridged metallocene compound to form ion pairs and/or (c) organoaluminum compound (element (c)) may be introduced in any order, to a starting raw material monomer (a mixture of ethylene and α-olefin having 3 to 20 carbon atoms). For example, elements (a), (b) and/or (c) are introduced alone or in any order, to a polymerization reactor with which raw material monomer is filled. Alternatively, if required, at least two elements among (a), (b) and/or (c) are mixed and then the mixed catalyst composition is introduced to the polymerization reactor with which raw material monomer is filled.

The ethylene-α-olefin copolymer (C) is prepared by a solution polymerization of ethylene and α-olefin having 3 to 20 carbon atoms under the catalyst system. As the α-olefin having 3 to 20 carbon atoms, one or more among linear α-olefins such as propylene, 1-butene, 1-penetene, 1-hexene etc., branched α-olefins such as isobutylene, 3-methyl-1-butene, 4-methyl-1-penetene etc. and mixtures thereof can be used. Preferably, one or more α-olefins having 3 to 6 carbon atoms can be used, and more preferably, propylene can be used. The solution polymerization can be carried out by using an inert solvent such as propane, butane or hexane etc. or an olefin monomer itself as a medium. In the copolymerization of ethylene and α-olefin of the present invention, the temperature for the copolymerization is conventionally 80 to 150°C and preferably 90 to 120°C, and the pressure for the copolymerization is conventionally atmospheric pressure to 500 kgf/cm$^2$ and preferably atmospheric pressure to 50 kgf/cm$^2$, which can vary in accordance with reacting materials, reacting conditions, etc.

Batch-, semi-continuous- or continuous-type polymerization can be carried out, and continuous-type polymerization is preferably carried out.

The ethylene-α-olefin copolymer (C) is in liquid phase at room temperature, where the α-olefin unit has a structure of being uniformly distributed in the copolymer chain. The ethylene-α-olefin copolymer (C) comprises e.g. 60 to 40 mol% and preferably 45 to 55 mol% of ethylene units derived from ethylene, and further comprises e.g. 40 to 60 mol% and preferably 45 to 55 mol% of α-olefin units having 3 to 20 carbon atoms which are derived from α-olefin having 3 to 20 carbon atoms.

The number average molecular weight (Mn) of the ethylene-α-olefin copolymer (C) is e.g. 500 to 10,000 and preferably 800 to 6,000, and the molecular weight distribution (Mw/Mn, Mw is weight average molecular weight) is e.g. 3 or less and preferably 2 or less. The number average molecular weight (Mn) and the molecular weight distribution (Mw/Mn) are measured by gel permeation chromatography (GPC).

The ethylene/α-olefin copolymer (A) has a kinematic viscosity at 100°C of e.g., 30 to 5,000 and preferably 50 to 3,000 mm$^2$/s, a pour point of e.g., 30 to -45°C and preferably 20 to -35°C, and a Bromine Number of e.g., 0.1 g / 100 g or less.

In the bridged metallocene compound represented by Formula 1, the polymerization activity is particularly high with respect to the copolymerization of ethylene with α-olefin. Utilizing this bridged metallocene compound selectively stops polymerization by hydrogen introduction at the molecular terminals, and thus there is little unsaturated bonding of the resulting ethylene/α-olefin copolymer (A). Moreover, since the ethylene/α-olefin copolymer (A) has a high random copolymerization, it has a controlled molecular weight distribution, and thus has excellent shear stability and viscosity properties.

Thus, the lubrication oil composition comprising the ethylene/α-olefin copolymer for use in the present invention is excellent in a balance between viscosity characteristics and shear stability and is also excellent in durability and thermal oxidation stability.

[Lubrication base oil]

In the present invention, other lubrication oil materials can be used, when needed. Preferably, a component (B) satisfying all of the following requirements (B-1) to (B-3) can be used.

(B-1) The kinematic viscosity at 100°C is 3 to 120 mm$^2$/s, preferably 4 to 110 mm$^2$/s.

(B-2) The viscosity index is not less than 90, preferably not less than 95.
(B-3) The pour point is not higher than -10°C, preferably not higher than -15°C.

The component (B) is a component other than the ethylene/α-olefin copolymer (A) and the polymer of α-olefin having 3 to 6 carbon atoms (G).
Preferred examples of such lubrication oil materials include synthetic oils and mineral oils, such as following components (C) to (E).
The mineral oil (E) that is used in the present invention when needed is known as a so-called lubrication base oil. Such lubrication base oils are regulated by the API (American Petroleum Institute) classification and are classified into groups. Properties of the lubrication base oils are set forth in Table 1.
Mineral oils as the lubrication base oils are generally used after they are subjected to refining step such as dewaxing, and they consist of three grades grouped based on the refining method.
[Table 1]

Table 1

| Group | Type | Viscosity index*1 | Saturated hydrocarbon content*2 (vol%) | Sulfur content*3 (% by weight) |
|---|---|---|---|---|
| (I)*4 | Mineral oil | 80 - 120 | <90 | >0.03 |
| (II) | Mineral oil | 80 - 120 | ≥90 | ≤0.03 |
| (III) | Mineral oil | ≥120 | ≥90 | ≤0.03 |
| (IV) | Poly-α-olefin | | | |
| (V) | Lubrication base oils other than those listed above | | | |

*1: measured in accordance with ASTM D445 (JIS K2283)
*2: measured in accordance with ASTM D3238
*3: measured in accordance with ASTM D4294 (JIS K2541)
*4: mineral oils in which a saturated hydrocarbon content is less than 90 (vol%) and a sulfur content is less than 0.03% by weight, or a saturated hydrocarbon content is 90 (vol%) or higher and a sulfur content is more than 0.03% by weight are also included in group (I).

The mineral oil (E) is mineral oil having the following properties (E-1) to (E-3), and is preferably high-viscosity index mineral oil, which is obtained by refining through hydrocracking or the like and belongs to any one of Groups (I) to (III) of the API classification, preferably Group (III) .
(E-1) The kinematic viscosity at 100°C is 3 to 40 $mm^2/s$, preferably 5 to 35 $mm^2/s$.
(E-2) The viscosity index is not less than 90, preferably not less than 95.
(E-3) The pour point is not higher than -10°C, preferably not higher than -15°C.

The synthetic oil (D) that is used in the present invention when needed is synthetic oil having the following properties (D-1) to (D-3), and is preferably a poly-α-olefin (PAO) of a relatively low viscosity and/or a polyol ester, a fatty acid ester or the like.
(D-1) The kinematic viscosity at 100°C is 3 to 10 $mm^2/s$, preferably 4 to 8 $mm^2/s$.
(D-2) The viscosity index is not less than 120, preferably not less than 125.
(D-3) The pour point is not higher than -40°C, preferably not higher than -50°C.

The poly-α-olefin (PAO) belonging to Group (IV) in Table 1 is a hydrocarbon polymer obtained by polymerizing an α-olefin of 8 or more carbon atoms as at least a raw material monomer, and includes, for example, polydecene obtained by polymerizing decene-1. Such a poly-α-olefin is a more preferred embodiment of the synthetic oil (D).
Such an α-olefin oligomer can be produced by cationic polymerization, thermal polymerization or radical polymerization using a Ziegler catalyst or a Lewis acid as a catalyst. As a matter of course, the α-olefin oligomer can be also obtained by polymerizing the corresponding olefin in the presence of the catalyst described in the aforesaid patent literature 1.
Examples of the base oils belonging to Group (V) in Table 1 include alkylbenzenes, alkylnaphthalenes and

ester oils.

The alkylbenzenes or the alkylnaphthalenes are usually dialkylbenzenes or dialkylnaphthalenes, most of which have an alkyl chain length of 6 to 14 carbon atoms, and such alkylbenzenes or alkylnaphthalenes are produced by Friedel-Crafts alkylation reaction of benzene or naphthalene with an olefin. The alkylation olefin used in the production of alkylbenzenes or alkylnaphthalenes may be a linear or branched olefin or a combination of these olefins. Such a production process is described in, for example, U.S. Patent No. 3,909,432.

Examples of the esters include monoesters produced from monobasic acids and alcohols; diesters produced from dibasic acids and alcohols or from diols and monobasic acids or acid mixtures; and polyol esters produced by bringing diols, triols (e.g., trimethylolpropane), tetraols (e.g., pentaerythritol), hexaols (e.g., dipentaerythritol) or the like to react with monobasic acids or acid mixtures. Examples of these esters include tridecyl pelargonate, di-2-ethylhexyl adipate, di-2-ethylhexyl azelate, trimethylolpropnane triheptanoate and pentaerythritol tetraheptanoate.

The synthetic oil (C) that is used in the present invention when needed is synthetic oil satisfying the following properties (C-1) to (C-3) and is preferably a poly-α-olefin (PAO) belonging to Group (IV), but it may contain synthetic oil such as an ester belonging to Group (V).

(C-1) The kinematic viscosity at 100°C is 20 to 120 $mm^2/s$, preferably 30 to 110 $mm^2/s$.
(C-2) The viscosity index is not less than 120, preferably not less than 130.
(C-3) The pour point is not higher than -30°C, preferably not higher than -35°C.

The component (B) that is preferably used as a lubrication base oil of a low viscosity in the present invention comprises one or more kinds selected from the synthetic oils (C), the synthetic oils (D) or the mineral oils (E), and may comprise one or more kinds selected from the synthetic oils (C), the synthetic oils (D) and the mineral oils (E), or may be a mixture of the synthetic oil (C) or (D) and the mineral oil (E).

When the total amount of the ethylene/α-olefin copolymer (A) and the later-described sulfur compound (F) is 100 parts by weight, these components (B) to (E) can be used preferably in an amount of 2 to 80 parts by weight, more preferably 3 to 60 parts by weight, particularly preferably 4 to 40 parts by weight.

In the lubrication oil composition of the present invention, the saturated hydrocarbon content based on the total amount of the hydrocarbon components in the components (A) to (E) is preferably not less than 80% by weight, more preferably not less than 90%, still more preferably not less than 95%, particularly preferably not less than 96%.

If the saturated hydrocarbon content is too low, durability for lubrication oil sometimes becomes insufficient.

The polymer of α-olefin having 3 to 6 carbon atoms (G), which is used in the present invention when needed, is an α-olefin polymer in which the amount of structural units of an α-olefin selected from α-olefins of 3 to 6 carbon atoms exceeds 70% by mol, and when the total amount of the lubrication oil composition is 100 parts by weight, the amount of the polymer of α-olefin (G) is not more than 15 parts by weight, preferably not more than 12 parts by weight, more preferably not more than 10 parts by weight, still more preferably not more than 5 parts by weight, particularly preferably not more than 2 parts by weight. The lower limit is preferably 0 part by weight.

If the content of the polymer of α-olefinhaving 3 to 6 carbon atoms (G) is too high, shear viscosity is sometimes lowered with time.

[Sulfur compound (F)]

The sulfur compound (F) for use in the present invention is characterized in that the carbon atom adjacent to sulfur is secondary or tertiary carbon. Examples of substituents containing such carbon include isopropyl group (i-Pr), s-butyl group (s-Bu), t-butyl group (t-Bu), 2-hexyl group, 3-hexyl group, 2-methyl-2-pentyl group and 3-methyl-3-pentyl group.

The sulfur compound (F) having a substituent of such structures is generally used as an extreme pressure agent, and it is surprising that the sulfur compound has good compatibility with the ethylene/α-olefin copolymer (A) though it maintains strong polarity, and it can form a lubrication oil composition having excellent transparency. Further, compatibility of the sulfur compound (F) is rarely impaired even if various oil agents have high viscosity, and as the later-described lubrication oil composition, a product of high transparency tends to be easily obtained. It is thought that the coexistence of compatibility and polarity is derived from the structure of the above-described bulky hydrocarbon-containing substituent.

In the sulfur compound (F) for use in the present invention, the ratio of the number of carbon atoms to the number of sulfur atoms is preferably 1.5 to 20, more preferably 1.8 to 15, particularly preferably 2 to 10. It is thought that since the sulfur compound satisfying such a range has high polarity, it exhibits strong interaction with, for example, a surface of a gear of metal equipment and can form a strong coated film.

If the ratio of the number of atoms is too high, polarity sometimes becomes insufficient. On the other hand, if

the ratio of the number of atoms is too low, compatibility of the sulfur compound with the ethylene/α-olefin copolymer (A) is sometimes lowered.

As a preferred example of such a sulfur compound as above, a compound of a structure wherein the aforesaid hydrocarbon substituents of a secondary or tertiary structure are present at both ends of a sulfur chain can be mentioned. Specific examples of such compounds include compounds having structures of t-$Bu_2$-S, s-$Bu_2$-S, i-$Pr_2$-S, t-Bu-S-S-t-Bu, s-BuS-S-s-Bu, i-Pr-S-S-i-Pr, t-Bu-S-S-S-t-Bu, s-Bu-S-S-S-s-Bu, i-Pr-S-S-S-i-Pr, t-Bu-S-S-S-S-t-Bu, s-Bu-S-S-S-S-s-Bu and i-Pr-S-S-S-S-i-Pr. (Here, Bu represents a butyl group, Pr represents a propyl group, s- represents secondary, and t-represents tertiary. As a matter of course, S is sulfur.)

When the total amount of the lubrication oil composition of the present invention is 100 parts by weight, the content of sulfur in the lubrication oil composition is 0.1 to 5 parts by weight, preferably 0.5 to 4 parts by weight, still more preferably 1 to 3 parts by weight.

When the above range is satisfied, transparency is imparted, and transparency and lubricating performance such as film formation can be allowed to coexist on a high level. If the content of sulfur is too low, lubrication oil performance sometimes becomes insufficient, and if the content of sulfur is too high, transparency for lubrication oil is sometimes impaired.

[Lubrication oil composition]

The lubrication oil composition of the present invention comprises the ethylene/α-olefin copolymer (A), and preferably comprises a component (B) comprising one or more kinds selected from the synthetic oil (C), the synthetic oil (D), the mineral oil (E) and the like, when needed. The lubrication oil composition of the present invention further comprises the sulfur compound (F). The ratio of these components contained is as previously described.

To the lubrication oil composition of the present invention, publicly known additives, such as pour point depressant, extreme pressure agent, friction modifier, oiliness agent, antioxidant, rust proofing agent and corrosion inhibitor, can be added in an amount of not more than 20 parts by weight based on 100 parts by weight of the composition, when needed.

Such a lubrication oil composition is characterized by exhibiting excellent viscosity characteristics and shear stability with a good balance.

[Pour point depressant]

Examples of the pour point depressants include a polymer or copolymer of alkyl methacrylate, a polymer or copolymer of alkyl acrylate, a polymer or copolymer of alkyl fumarate, a polymer or copolymer of alkyl maleate and an alkyl aromatic compound. Of these, a polymethacrylate pour point depressant that is a pour point depressant comprising a polymer or copolymer of alkyl methacrylate is particularly preferable. The number of carbons of the alkyl group in the alkyl methacrylate is preferably 12 to 20, and the content of the alkyl methacrylate is 0.05 to 2% by weight of the total amount of the composition. As such pour point depressants, products that are on the market as pour point depressants are obtainable. Examples of brand names of such commercial products include Aclube 146 and Aclube 136 available from Sanyo Chemical Industries, Ltd., and Lubran 141 and Lubran 171 available from Toho Chemical Industry Co., Ltd.

These components can be used by dissolving them in mineral oils, esters or the like or diluting them. The concentration is preferably 10 to 80%, more preferably 30 to 70%.

[Extreme pressure agent]

As the extreme pressure agents, not only the aforesaid sulfur compounds but also sulfurized olefins, sulfurized oils and fats, sulfides, phosphates, phosphites, phosphate amine salts and phosphite amine salts can be mentioned.

These components can be used by dissolving them in esters, solvents comprising the aforesaid olefin polymers or the like or diluting them. The concentration is preferably 10 to 80%, more preferably 30 to 70%.

[Friction modifier]

As the friction modifiers, organometal-based friction modifiers, typically organomolybdenum compounds such as molybdenum dithiophosphate and molybdenum dithiocarbamate, can be mentioned.

These components can be used by dissolving them in esters or the like or diluting them. The concentration is preferably 10 to 80%, more preferably 30 to 70%.

Examples of the oiliness agents include fatty acids having an alkyl group of 8 to 22 carbon atoms, fatty acid esters and higher alcohols.

[Antioxidant]

Specific examples of the antioxidants include phenol-based antioxidants, such as 2,6-di-t-butyl-4-methylphenol; and amine-based antioxidants, such as dioctyldiphenylamine.
Examples of anti-foaming agents include silicon-based anti-foaming agents, such as dimethylsiloxane and silica gel dispersion; and alcohol- and ester-based anti-foaming agents.
These components can be used by dissolving them in esters or the like or diluting them. The concentration is preferably 10 to 80%, more preferably 30 to 70%.

[Rust proofing agent]

Examples of the rust proofing agents include carboxylic acids, carboxylates, esters, and phosphoric acid. Examples of the corrosion inhibitors include benzotriazole, derivatives thereof and thiazole-based compounds.
Further, benzotriazole-based, thiadiazole-based and imidazole-based compounds can be also mentioned as the corrosion inhibitors.
The lubrication oil composition of the present invention is excellent particularly in viscosity characteristics and shear stability, and further in durability and thermal oxidation stability, and is effective as industrial lubrication oil.
The kinematic viscosity of the lubrication oil composition of the present invention at 40°C is in the range of 450 to 51,000 $mm^2/s$. As industrial lubrication oil, the lubrication oil composition having a viscosity of ISO-500 to ISO-46,000 is preferable, and this is particularly effective as open type gear oil.
The lubrication oil composition of the present invention can be favorably used as industrial lubrication oil for various industrial machines and transportation machines. The lubrication oil composition of the present invention is favorable particularly for gear oil. Further, the lubrication oil composition of the present invention can be favorably used as gear oil for construction machines.
The lubrication oil composition of the present invention is expected to be excellent in film-forming ability on a metal surface, has high lubricating performance and can become lubrication oil having excellent transparency also at low temperatures. By using the lubrication oil composition continuously, its transparency tends to be gradually lowered, but conversely, the transparency can be regarded as an index of deterioration or time for replacement. On this account, transparency is also one of the important properties for lubrication oils.

EXAMPLES

The present invention will be further described with reference to the following examples. Various properties in the examples were measured in the following manner.

[Ethylene content]

Using a JEOL LA500-model nuclear magnetic resonance spectrometer, the ethylene content was measured in a mixed solvent of orthodichlorobenzene and benzene-d6 (orthodichlorobenzene/benzene-d6 = 3/1 to 4/1 (ratio by volume)) under the conditions of 120°C, a pulse width of 45° pulse and a pulse repetition interval of 5.5 seconds. The number of repeated measurements is 1000 or more, preferably 10000 or more.

[B-value]

Employing o-dichloro benzene/benzene-$d_6$ (4/1 [vol/vol%]) as a measurement solvent, the $^{13}$C-NMR spectrum was measured under the measuring conditions (100 MHz, ECX 400P, made by JEOL Ltd) of temperature of 120°C, spectral width of 250 ppm, pulse repeating time of 5.5 seconds, and a pulse width of 4.7 μsec (45° pulse), or under the measuring conditions (125 MHz, AVANCE III Cryo-500 made by Bruker Biospin Inc) of temperature of 120°C, spectral width of 250 ppm, pulse repeating time of 5.5 seconds, and a pulse width of 5.0 μsec (45° pulse), and the B-value was calculated based on the following Formula [1].
[Formula 1]

$$B = \frac{P_{OE}}{2P_O \cdot P_E} \quad \cdots [1]$$

In Formula [1], $P_E$ indicates the molar fraction contained in the ethylene component, Po indicates the molar fraction contained in the α-olefin component, and $P_{OE}$ indicates the molar fraction of the ethylene-α-olefin sequences of all dyad sequences.

[Saturated hydrocarbon content]

An ECX400-model nuclear magnetic resonance spectrometer manufactured by JEOL Ltd., was used, and as a solvent, deuterated orthodichlorobenzene, deuterated chloroform or deuterated benzene was appropriately used.
A sample concentration of 50 to 60 mg/0.5 mL and a measuring temperature of room temperature to 120°C were appropriately selected. Measurement was carried out under the conditions of an observed nucleus of 1H (400 MHz), a single pulse sequence, a pulse width of 5.12 μsec (45° pulse), a repetition interval of 7.0 seconds, a cumulative number of 500 or more and a chemical shift reference value of 7.10 ppm. Peaks of 1H, etc. derived from vinyl group, methyl group and the like were assigned in the usually way, and using the result of the above ethylene content together, the saturated hydrocarbon content was calculated.
In the polyolefins used in the experimental examples of the present invention, peaks derived from unsaturated carbon-carbon bonds were rarely observed.

[Kinematic viscosity (40°C, 100°C)]

Measurement was carried out in accordance with ASTM D445. In the examples, the viscosity of a formulated oil was adjusted in the following manner on the basis of each ISO classification.

(1) ISO 460: A formulated oil was prepared by carrying out formulation so that the kinematic viscosity (40°C) can be 460±46 $mm^2/s$.
(2) ISO 1000: A formulated oil was prepared by carrying out formulation so that the kinematic viscosity (40°C) can be 1000±100 $mm^2/s$.
(3) ISO 2200: A formulated oil was prepared by carrying out formulation so that the kinematic viscosity (40°C) can be 2200±220 $mm^2/s$.
(4) ISO 3200: A formulated oil was prepared by carrying out formulation so that the kinematic viscosity (40°C) can be 3200±320 $mm^2/s$.
(5) ISO 4600: A formulated oil was prepared by carrying out formulation so that the kinematic viscosity (40°C) can be 4600±460 $mm^2/s$.
(6) ISO 6800: A formulated oil was prepared by carrying out formulation so that the kinematic viscosity (40°C) can be 6800±680 $mm^2/s$.
(7) ISO 10000: A formulated oil was prepared by carrying out formulation so that the kinematic viscosity (40°C) can be 10000±1000 $mm^2/s$.
(8) ISO 22000: A formulated oil was prepared by carrying out formulation so that the kinematic viscosity (40°C) can be 22000±2200 $mm^2/s$.

[Viscosity index]

Viscosity index was measured and calculated by the method described in JIS K2283.

[Molecular weight distribution (Mw/Mn)]

A pump for liquid chromatography, a sampling apparatus, columns for gel permeation chromatography (GPC) and a differential refractive index detector (RI detector) described below were connected, and GPC measurement was carried out to determine a molecular weight distribution.
Liquid chromatography apparatus: 515 HPLC Pump manufactured by Waters Corporation
Sampling apparatus: 717 plus Autosampler manufactured by Waters Corporation
Mobile phase: THF (containing stabilizer, grade for liquid chromatography)
Column: One column of MIXED-D manufactured by Polymer Laboratories Ltd. and one column of 500 Å manufactured by Polymer Laboratories Ltd. were connected in series.

Sample concentration: 5 mg/mL
Mobile phase flow rate: 1.0 mL/min
Measuring temperature: ordinary temperature
Standard sample for calibration curve: EasiCal PS-1 manufactured by Polymer Laboratories Ltd.

[Shear stability (viscosity reduction rate %)]

Using a KRL shearing test machine, a test was carried out in accordance with CEC-L-45 (CEC: an organization for the management of test procedure for the performance testing of automotive fuels & lubricants in Europe) to evaluate a reduction rate of viscosity at 40°C.

Shear stability is an index of kinematic viscosity loss attributable to cleavage of a molecular chain caused by that a copolymer component in lubrication oil suffers shear at the metal sliding part.

[Compatibility (solubility of extreme pressure agent)]

10 days after the formulated oil was heated and stirred at a temperature of 60°C, appearance of the oil was observed and evaluated by the following grades.

grade A: transparent, grade B: slightly turbid, grade C: turbid

[Analysis of extreme pressure agent (GC/MS method)]

The structure of a sulfur compound contained in an extreme pressure agent was measured by a so-called GC/MS method using gas chromatography and a mass spectrometer in combination. The measuring conditions are described below.

Apparatus: Jms-Q1000GC K9 type apparatus manufactured by JEOL Ltd.
Column: DB5MS + DG (inner diameter: 0.25 mm, length: 30 m)
Column temperature control pattern: The temperature was maintained at 40°C for 3 minutes and raised at a rate of 10°C/min, and after the temperature reached 320°C, this temperature was maintained for 29 minutes to complete the temperature control.

Mobile phase: helium (flow rate: 0.7 ml/min)
Sample injection temperature: 280°C, split (1/20)
Sample injection quantity: 1 μL (diluting solvent: hexane)
Ionization method: EI (electron ionization), ionization temperature: 200°C

[Thermal oxidation stability]

The thermal oxidation stability was conducted in accordance with the Oxidation Stability Test of Lubrication Oil for Internal Combustion Engines method described in JIS K2514, and the lacquer rating was evaluated 72 hours after the test time.

[Components used in the present invention]

Components used in the examples and the comparative examples, such as lubrication base oils, are set forth in Table 2.

[Table 2]

Table 2

| | Note on Component (Main Component) | Viscosity 100°C ($mm^2$/s) | Viscosity 40°C ($mm^2$/s) | Viscosity Index | Pour Point (°C) |
|---|---|---|---|---|---|
| Chevron NEXBASE 2006 | polydecene (saturation ratio~100%) | 5.83 | 30.5 | 137 | -65.0 |

(continued)

| | Note on Component (Main Component) | Viscosity 100°C ($mm^2/s$) | Viscosity 40°C ($mm^2/s$) | Viscosity Index | Pour Point (°C) |
|---|---|---|---|---|---|
| BFS TMTC | polyol ester | 4.40 | 19.5 | 140 | -50.0 |
| JX bright stock N460 | mineral oil (API Group I) | 29.9 | 460 | 97 | -10.0 |
| JX HV1900 | polybutene (main component) | 3950 | | | |
| UNICHEMA PRIOLUBE 3986 | polyol ester | 2030 | 54900 | 264 | |
| Shell Chemicals SV251 | Viscosity modifier | 1480 | 15500 | 346 | |

Extreme pressure agents used in the examples and the comparative examples are as follows.

• HITEC (trademark)-3339 available from Afton Chemical

sulfur content: 32.6% by weight, phosphorus content: 1.19% by weight (catalogue values)

As a sulfur-containing component, di-t-butyl polysulfide was detected by the GC/MS method. In addition, a component suggesting mineral oil was contained.
• HITEC (trademark) 343 available from Afton Chemical
A peak suggesting a sulfur compound having a secondary or tertiary alkyl group was not detected by the GC/MS method.

[Method for polymerizing an ethylene/$\alpha$-olefin copolymer (A) ]

[Polymerization Example 1]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into the polymerization vessel, and 0.023 mmol of N,N-dimethylanilinium tetrakis (pentafluorophenyl) borate and 0.00230 mmol of [diphenylmethylene ($\eta^5$-(3-n-butyl cyclopentadienyl) ($\eta^5$-2, 7-di-t-butyl fluorenyl)] zirconium dichloride, which were pre-mixed in toluene for 15 minutes or more, were charged into the polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 1.43 g of an ethylene-propylene copolymer. The ethylene content of the resulting polymer (polymer 1) was 52.4 mol%, Mw was 13,600, Mw/Mn was 1.9, B-value was 1.2, and kinematic viscosity at 100°C was 2,000 $mm^2/s$.

[Polymerization Example 2]

250 mL of heptane was charged into a glass polymerization vessel with a volume of 1 L sufficiently substituted with nitrogen, and the temperature in the system was raised to 50°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into a polymerization vessel, and 0.688 mmol of MMAO and 0.00230 mmol of dimethylsilyl bis(indenyl) zirconium dichloride, which were pre-mixed in toluene for 15 minutes or more, were charged into the polymerization vessel to start the polymerization. Ethylene, propylene and hydrogen were then continuously supplied, and polymerization took place at 50°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of

distilled water, dried with magnesium sulfate, and the solvent was then distilled off under reduced pressure. The resulting polymer was dried overnight at 80°C under reduced pressure to obtain 1.43 g of an ethylene-propylene copolymer. The ethylene content of the resulting polymer (polymer 2) was 52.1 mol%, Mw was 13,800, Mw/Mn was 2.0, B-value was 1.2, and 100°C kinematic viscosity was 2,000 $mm^2/s$.

[Polymerization Example 3]

250 mL of decane was charged into a glass polymerization vessel with a volume of 1 L sufficiently substituted with nitrogen, and the temperature in the system was raised to 130°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into the polymerization vessel, and 1.213 mmol of MMAO and 0.00402 mmol of [[diphenylmethylene ($\eta^5$-(3-n-butyl cyclopentadienyl) ($\eta^5$-2,7-di-t-butyl fluorenyl)] zirconium dichloride, which were pre-mixed in toluene for 15 minutes or more, were charged into the polymerization vessel to start the polymerization. Ethylene, propylene and hydrogen were then continuously supplied, and polymerization took place at 130°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 0.77 g of an ethylene-propylene copolymer. The ethylene content of the resulting polymer (polymer 3) was 48.8 mol%, Mw was 4,100, Mw/Mn was 1.7, B-value was 1.2, and 100°C kinematic viscosity was 100 $mm^2/s$.

[Polymerization Example 4]

250 mL of decane was charged into a glass polymerization vessel with a volume of 1 L sufficiently substituted with nitrogen, and the temperature in the system was raised to 130°C, and then 25 L/h of ethylene, 75 L/h of propylene, and 100 L/h of hydrogen were continuously supplied into the polymerization vessel, and stirred with a rotation of 600 rpm. Then, 0.2 mmol of triisobutyl aluminum was charged into the polymerization vessel, and 1.213 mmol of MMAO and 0.00402 mmol of dimethylsilyl bis(indenyl) zirconium dichloride, which were pre-mixed in toluene for 15 minutes or more, were charged into the polymerization vessel to start the polymerization. Ethylene, propylene and hydrogen were then continuously supplied, and polymerization took place at 130°C for 15 minutes. Polymerization was stopped by adding a small amount of isobutyl alcohol in the system, and the unreacted monomers were purged. The resulting polymer solution was washed 3 times with 100 mL of a 0.2 mol/L solution of hydrochloric acid, further washed 3 times with 100 mL of distilled water, dried with magnesium sulfate, and the solvent was then distilled off under reduced pressure. The resulting polymer was dried overnight at 80°C under reduced pressure to obtain 0.77 g of an ethylene-propylene copolymer. The ethylene content of the resulting polymer (polymer 4) was 48.7 mol%, Mw was 4,200, Mw/Mn was 1.8, B-value was 1.2, and 100°C kinematic viscosity was 100 $mm^2/s$.

(Example 1)

Using 93.0% by weight of the polymer 3 obtained in Polymerization Example 3 as the ethylene/propylene copolymer (A) serving as a viscosity modifier, 5.0% by weight of a polyol ester (TMTC available from BFS) classified as API Group (V) and 2.0% by weight of an extreme pressure agent HITEC (trademark)-3339 (available from Afton Chemical), formulation was carried out to prepare a formulated oil having a viscosity equivalent to ISO 1000. Lubrication oil properties of the formulated oil are set forth in Table 3.

(Example 2)

Using 9.5% by weight of the polymer 1 obtained in Polymerization Example 1 and 83.5% by weight of the polymer 3 obtained in Polymerization Example 3 as the ethylene/propylene copolymers (A), 5.0% by weight of a polyol ester (TMTC available from BFS) as the synthetic oil (D), and 2.0% by weight of an extreme pressure agent HITEC (trademark)-3339 (available from Afton Chemical), formulation was carried out to prepare a formulated oil having a viscosity equivalent to ISO 2200. Lubrication oil properties of the formulated oil are set forth in Table 3.

(Example 3)

A formulated oil having a viscosity equivalent to ISO 3200 was prepared by carrying out formulation in the same manner as described in Example 2, except for using 28.0% by weight of the copolymer 1 obtained in Polymerization

Example 1, and 65.0% by weight of the polymer 3 obtained in Polymerization Example 3 as the ethylene/propylene copolymers (A). Lubrication oil properties of the formulated oil are set forth in Table 3.

(Example 4)

A formulated oil having a viscosity equivalent to ISO 6800 was prepared by carrying out formulation in the same manner as described in Example 2, except for using 48.0% by weight of the polymer 1 obtained in Polymerization Example 1, and 45.0% by weight of the polymer 3 obtained in Polymerization Example 3 as the ethylene/propylene copolymers (A). Lubrication oil properties of the formulated oil are set forth in Table 3.

(Example 5)

Using 4.0% by weight of the polymer 1 obtained in Polymerization Example 1, and 84.0% by weight of the polymer 3 obtained in Polymerization Example 3 as the ethylene/propylene copolymers (A), 10.0% by weight of a poly $\alpha$-olefin (NEXBASE 2006, available from CHEVRON) as the synthetic oil (D), and 2.0% by weight of an extreme pressure agent HITEC (trademark)-3339 (available from Afton Chemical), formulation was carried out to prepare a formulated oil having a viscosity equivalent to ISO 1000. Lubrication oil properties of the formulated oil are set forth in Table 3.

(Example 6)

A formulated oil having a viscosity equivalent to ISO 3200 was prepared by carrying out formulation in the same manner as described in Example 5, except for using 30.0% by weight of the polymer 1 obtained in Polymerization Example 1, and 58.0% by weight of the polymer 3 obtained in Polymerization Example 3 as the ethylene/propylene copolymers (A). Lubrication oil properties of the formulated oil are set forth in Table 3.

(Example 7)

Using 10.0% by weight of the polymer 1 obtained in Polymerization Example 1, and 73.0% by weight of the polymer 3 obtained in Polymerization Example 3 as the ethylene/propylene copolymers (A), and 10.0% by weight of a poly $\alpha$-olefin (NEXBASE 2006, available from CHEVRON) as the synthetic oil (D), 5.0% by weight of a polyol ester (TMTC available from BFS), and 2.0% by weight of an extreme pressure agent HITEC (trademark)-3339 (available from Afton Chemical), formulation was carried out to prepare a formulated oil having a viscosity equivalent to ISO 1000. Lubrication oil properties of the formulated oil are set forth in Table 3.

(Example 8)

A formulated oil having a viscosity equivalent to ISO 2200 was prepared by carrying out formulation in the same manner as described in Example 7, except for using 30.0% by weight of the polymer 1 obtained in Polymerization Example 1, and 53.0% by weight of the polymer 3 obtained in Polymerization Example 3 as the ethylene/propylene copolymers (A). Lubrication oil properties of the formulated oil are set forth in Table 3.

(Example 9)

Using 18.0% by weight of the polymer 1 obtained in Polymerization Example 1 as the ethylene/propylene copolymer (A), 80.0% by weight of a highly viscous poly $\alpha$-olefin (DURASYN 180 available from INEOS) as the synthetic oil (C), and 2.0% by weight of an extreme pressure agent HITEC (trademark)-3339 (available from Afton Chemical), formulation was carried out to prepare a formulated oil having a viscosity equivalent to ISO 2200. Lubrication oil properties of the formulated oil are set forth in Table 3.

(Example 10)

A formulated oil having a viscosity equivalent to ISO 3200 was prepared by carrying out formulation in the same manner as described in Example 9, except for using 27.0% by weight of the polymer 1 obtained in Polymerization Example 1 as the ethylene/propylene copolymer (A), and 71.0% by weight of a highly viscous poly $\alpha$-olefin (DURASYN 180 available from INEOS) as the synthetic oil (C). Lubrication oil properties of the formulated oil are set forth in Table 3.

(Example 11)

Using 20.0% by weight of the polymer 1 obtained in Polymerization Example 1 as the ethylene/propylene copolymer (A), 73.0% by weight of a highly viscous poly $\alpha$-olefin (DURASYN 180 available from INEOS) as the synthetic oil (C), 5.0% by weight of a polyol ester (TMTC available from BFS) as the synthetic oil (D), and 2.0% by weight of an extreme pressure agent HITEC (trademark)-3339 (available from Afton Chemical), formulation was carried out to prepare a formulated oil having a viscosity equivalent to ISO 2200. Lubrication oil properties of the formulated oil are set forth in Table 3.

(Example 12)

A formulated oil having a viscosity equivalent to ISO 3200 was prepared by carrying out formulation in the same manner as described in Example 11, except for using 30.0% by weight of the polymer 1 obtained in Polymerization Example 1 as the ethylene/propylene copolymer (A), and 63.0% by weight of a highly viscous poly $\alpha$-olefin (DURASYN 180 available from INEOS) as the synthetic oil (C). Lubrication oil properties of the formulated oil are set forth in Table 3.

(Example 13)

Using 30.0% by weight of the polymer 1 obtained in Polymerization Example 1 as the ethylene/propylene copolymer (A), 53.0% by weight of a high viscosity poly $\alpha$-olefin (DURASYN 180 available from INEOS) as the synthetic oil (C), 10.0% by weight of a low viscosity poly $\alpha$-olefin (NEXBASE 2006 available from CHEVRON) as the synthetic oil (D), 5.0% by weight of a polyol ester (TMTC available from BFS) as the synthetic oil (D), and 2.0% by weight of an extreme pressure agent HITEC (trademark)-3339 (available from Afton Chemical), formulation was carried out to prepare a formulated oil having a viscosity equivalent to ISO 2200. Lubrication oil properties of the formulated oil are set forth in Table 3.

(Example 14)

A formulated oil having a viscosity equivalent to ISO 3200 was prepared by carrying out formulation in the same manner as described in Example 13, except for using 40.0% by weight of the polymer 1 obtained in Polymerization Example 1 as the ethylene/propylene copolymer (A), and 43.0% by weight of a highly viscous poly $\alpha$-olefin (DURASYN 180 available from INEOS) as the synthetic oil (C). Lubrication oil properties of the formulated oil are set forth in Table 3.

(Example 15)

Using 20.0% by weight of the polymer 1 obtained in Polymerization Example 1 as the ethylene/propylene copolymer (A), 78.0% by weight of a bright stock (N460 available from JX) as the mineral oil (E), and 2.0% by weight of an extreme pressure agent HITEC (trademark)-3339 (available from Afton Chemical), formulation was carried out to prepare a formulated oil having a viscosity equivalent to ISO 2200. Lubrication oil properties of the formulated oil are set forth in Table 3.

(Example 16)

A formulated oil having a viscosity equivalent to ISO 4600 was prepared by carrying out formulation in the same manner as described in Example 15, except for using 40.0% by weight of the polymer 1 obtained in Polymerization Example 1 as the ethylene/propylene copolymer (A), and 58.0% by weight of a bright stock (N460 available from JX) as the mineral oil (E). Lubrication oil properties of the formulated oil are set forth in Table 3.

[Table 3]

Table 3

| | | Example 1 | Example 2 | Example 3 | Example 4 | Example 5 | Example 6 | Example 7 | Example 8 | Example 9 |
|---|---|---|---|---|---|---|---|---|---|---|
| Polymer 1 | % by weight | | 9.5 | 28.0 | 48.0 | 4.0 | 30.0 | 10.0 | 30.0 | 18.0 |
| Polymer 2 | % by weight | | | | | | | | | |
| Polymer 3 | % by weight | 93.0 | 83.5 | 65.0 | 45.0 | 84.0 | 58.0 | 73.0 | 53.0 | |
| Polymer 4 | % by weight | | | | | | | | | |
| DURASYN 180 | % by weight | | | | | | | | | 80.0 |
| NEXBASE 2006 | % by weight | | | | | 10.0 | 10.0 | 10.0 | 10.0 | |
| TMTC | % by weight | 5.0 | 5.0 | 5.0 | 5.0 | | | 5.0 | 5.0 | |
| Bright stock N460 | % by weight | | | | | | | | | |
| HITEC 3339 | % by weight | 2.0 | 2.0 | 2.0 | 2.0 | 2.0 | 2.0 | 2.0 | 2.0 | 2.0 |
| 40°C kinematic viscosity | $mm^2/s$ | 962 | 2,010 | 3,120 | 6,300 | 1,100 | 2,980 | 1,050 | 2,300 | 2,120 |
| Viscosity index | - | 163 | 185 | 200 | 220 | 168 | 200 | 170 | 200 | 155 |
| Shear test viscosity reduction rate | % | 0 | 7 | 9 | | 7 | 10 | 7 | 11 | 10 |
| Compatibility (appearance) | | A | A | A | A | A | A | A | A | A |
| ISOT | Lacquer rating | Adhered substance (thin) | Adhered substance (thin) | Adhered substance (thin) | Adhered substance (thin) | Adhered substance (thin) | Adhered substance (thin) | Adhered substance (thin) | Adhered substance (thin) | Adhered substance (medium) |

[Table 3] (continued)

| | | Example 10 | Example 11 | Example 12 | Example 13 | Example 14 | Example 15 | Example 16 |
|---|---|---|---|---|---|---|---|---|
| Polymer 1 | % by weight | 27.0 | 20.0 | 30.0 | 30.0 | 40.0 | 20.0 | 40.0 |
| Polymer 2 | % by weight | | | | | | | |
| Polymer 3 | % by weight | | | | | | | |
| Polymer 4 | % by weight | | | | | | | |
| DURASYN 180 | % by weight | 71.0 | 73.0 | 63.0 | 53.0 | 43.0 | | |
| NEXBASE 2006 | % by weight | | | | 10.0 | 10.0 | | |
| TMTC | % by weight | | 5.0 | 5.0 | 5.0 | 5.0 | | |
| Bright stock N460 | % by weight | | | | | | 78.0 | 58.0 |
| HITEC 3339 | % by weight | 2.0 | 2.0 | 2.0 | 2.0 | 2.0 | 2.0 | 2.0 |
| 40°C kinematic viscosity | $mm^2/s$ | 3,300 | 2,100 | 3,100 | 2,120 | 3,150 | 2,120 | 4,600 |
| Viscosity index | - | 230 | 161 | 225 | 170 | 295 | 151 | 188 |
| Shear test viscosity reduction rate | % | 10 | 10 | 11 | 11 | 11 | 10 | 10 |
| Compatibility (appearance) | | A | A | A | A | A | A | A |
| ISOT | Lacquer rating | Adhered substance (medium) | Adhered substance (medium) | Adhered substance (medium) | Adhered substance (medium) | Adhered substance (medium) | Adhered substance (medium) | Adhered substance (medium) |

(Comparative Example 1)

Using 20.0% by weight of polybutene (HV-1900 available from JX) as a viscosity modifier, 78.0% by weight of the polymer 3 obtained in Polymerization Example 3 as the ethylene/propylene copolymer (A) and 2.0% by weight of an extreme pressure agent HITEC (trademark)-3339 (available from Afton Chemical), formulation was carried out to prepare a formulated oil having a viscosity equivalent to ISO 2200. Lubrication oil properties of the formulated oil are set forth in Table 4.

(Comparative Example 2)

A formulated oil having a viscosity equivalent to ISO 6800 was prepared by carrying out formulation in the same manner as described in Comparative Example 1, except for using 42.0% by weight of polybutene (HV-1900 available from JX), and 56.0% by weight of the polymer 3 obtained in Polymerization Example 3 as the ethylene/propylene copolymer (A). Lubrication oil properties of the formulated oil are set forth in Table 4.

(Comparative Example 3)

A formulated oil having a viscosity equivalent to ISO 1000 was prepared by carrying out formulation in the same manner as described in Example 1, except for using HITEC (trademark) 343 (available form Afton Chemical) instead of HITEC (trademark)-3339 (available form Afton Chemical) as an extreme pressure agent. The result of compatibility

evaluation of the formulated oil is set forth in Table 4.

(Comparative Example 4)

A formulated oil having a viscosity equivalent to ISO 2200 was prepared by carrying out formulation in the same manner as described in Example 2, except for using HITEC (trademark) 343 (available form Afton Chemical) instead of HITEC (trademark)-3339 (available form Afton Chemical) as an extreme pressure agent. The result of compatibility evaluation of the formulated oil set forth in Table 4.

(Comparative Example 5)

A formulated oil having a viscosity equivalent to ISO 3200 was prepared by carrying out formulation in the same manner as described in Example 3, except for using HITEC (trademark) 343 (available form Afton Chemical) instead of HITEC (trademark)-3339 (available form Afton Chemical) as an extreme pressure agent. The result of compatibility evaluation of the formulated oil of the formulated oil are set forth in Table 4.

(Comparative Example 6)

A formulated oil having a viscosity equivalent to ISO 6800 was prepared by carrying out formulation in the same manner as described in Example 4, except for using HITEC (trademark) 343 (available form Afton Chemical) instead of HITEC (trademark)-3339 (available form Afton Chemical) as an extreme pressure agent. The result of compatibility evaluation of the formulated oil of the formulated oil are set forth in Table 4.

(Comparative Example 7)

A formulated oil having a viscosity equivalent to ISO 2200 was prepared by carrying out formulation in the same manner as described in Example 15, except for using HITEC (trademark) 343 (available form Afton Chemical) instead of HITEC (trademark)-3339 (available form Afton Chemical) as an extreme pressure agent. The result of compatibility evaluation of the formulated oil of the formulated oil are set forth in Table 4.

(Comparative Example 8)

A formulated oil having a viscosity equivalent to ISO 4600 was prepared by carrying out formulation in the same manner as described in Example 16, except for using HITEC (trademark) 343 (available form Afton Chemical) instead of HITEC (trademark)-3339 (available form Afton Chemical) as an extreme pressure agent. The result of compatibility evaluation of the formulated oil of the formulated oil are set forth in Table 4.

(Comparative Example 9)

A formulated oil having a viscosity equivalent to ISO 1000 was prepared by carrying out formulation in the same manner as described in Example 1, except for using the polymer 4 obtained in Polymerization Example 4 instead of the polymer 3. Lubrication oil properties of the formulated oil are set forth in Table 4.

(Comparative Example 10)

A formulated oil having a viscosity equivalent to ISO 2200 was prepared by carrying out formulation in the same manner as described in Example 2, except for using the polymer 2 obtained in Polymerization Example 2 instead of the polymer 1, and using the polymer 4 obtained in Polymerization Example 4 instead of the polymer 3. Lubrication oil properties of the formulated oil are set forth in Table 4.

(Comparative Example 11)

A formulated oil having a viscosity equivalent to ISO 6800 was prepared by carrying out formulation in the same manner as described in Example 4, except for using the polymer 2 obtained in Polymerization Example 2 instead of the polymer 1, and using the polymer 4 obtained in Polymerization Example 4 instead of the polymer 3. Lubrication oil properties of the formulated oil are set forth in Table 4.

(Comparative Example 12)

A formulated oil having a viscosity equivalent to ISO 2200 was prepared by carrying out formulation in the same manner as described in Example 8, except for using the polymer 2 obtained in Polymerization Example 2 instead of the polymer 1, and using the polymer 4 obtained in Polymerization Example 4 instead of the polymer 3. Lubrication oil properties of the formulated oil are set forth in Table 4.

(Comparative Example 13)

A formulated oil having a viscosity equivalent to ISO 3200 was prepared by carrying out formulation in the same manner as described in Example 14, except for using the polymer 2 obtained in Polymerization Example 2 instead of the polymer 1. Lubrication oil properties of the formulated oil are set forth in Table 4.

(Comparative Example 14)

A formulated oil having a viscosity equivalent to ISO 2200 was prepared by carrying out formulation in the same manner as described in Example 15, except for using the polymer 2 obtained in Polymerization Example 2 instead of the polymer 1. Lubrication oil properties of the formulated oil are set forth in Table 4.

[Table 4]

Table 4

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Polymer 1 | % by weight | | | | 9.5 | 28.0 | 48.0 | 20.0 | 40.0 |
| Polymer 2 | % by weight | | | | | | | | |
| Polymer 3 | % by weight | 78.0 | 56.0 | 93.0 | 83.5 | 65.0 | 45.0 | | |
| Polymer 4 | % by weight | | | | | | | | |
| HV 1900 | % by weight | 20.0 | 42.0 | | | | | | |
| DURASYN 180 | % by weight | | | | | | | | |
| NEXBASE 2006 | % by weight | | | | | | | | |
| TMTC | % by weight | | | 5.0 | 5.0 | 5.0 | 5.0 | | |
| Bright stock N460 | % by weight | | | | | | | 78.0 | 58.0 |
| HITEC 3339 | % by weight | 2.0 | 2.0 | | | | | | |
| HITEC 343 | % by weight | | | 2.0 | 2.0 | 2.0 | 2.0 | 2.0 | 2.0 |
| 40°C kinematic viscosity | $mm^2/s$ | 2,360 | 6,800 | | | | | | |
| Viscosity index | - | 144 | 166 | | | | | | |
| Shear test viscosity reduction rate | % | 13 | | | | | | | |
| Compatibility (appearance) | | A | A | C | C | C | C | C | C |
| ISOT | Lacquer rating | Adhered substance (thick) | Adhered substance (thick) | | | | | | Adhered substance (thick) |

[Table 4] (continued)

| | | Comparative Example 9 | Comparative Example 10 | Comparative Example 11 | Comparative Example 12 | Comparative Example 13 | Comparative Example 14 |
|---|---|---|---|---|---|---|---|
| Polymer 1 | % by weight | | | | | | |
| Polymer 2 | % by weight | | 9.5 | 48.0 | 30.0 | 40.0 | 20.0 |
| Polymer 3 | % by weight | | | | | | |
| Polymer 4 | % by weight | 93.0 | 83.5 | 45.0 | 53.0 | | |
| HV 1900 | % by weight | | | | | | |
| DURASYN 180 | % by weight | | | | | 43.0 | |
| NEXBASE 2006 | % by weight | | | | 10.0 | 10.0 | |
| TMTC | % by weight | 5.0 | 5.0 | 5.0 | 5.0 | 5.0 | |
| Bright stock N460 | % by weight | | | | | | 78.0 |
| HITEC 3339 | % by weight | 2.0 | 2.0 | 2.0 | 2.0 | 2.0 | 2.0 |
| HITEC 343 | % by weight | | | | | | |
| 40°C kinematic viscosity | $mm^2/s$ | 966 | 2,000 | 6,600 | 2,250 | 3,200 | 2,180 |
| Viscosity index | - | 165 | 181 | 225 | 196 | 300 | 152 |
| Shear test viscosity reduction rate | % | 0 | 8 | 9 | | 12 | 12 |
| Compatibility (appearance) | | A | A | A | A | A | A |
| ISOT | Lacquer rating | Adhered substance (thick) | Adhered substance (thick) | Adhered substance (thick) | Adhered substance (thick) | Adhered substance (thick) | Adhered substance (thick) |

## Claims

**1.** A lubrication oil composition comprising

(A) a liquid random copolymer of ethylene and an $\alpha$-olefin, which is produced by a method ($\alpha$) below,
(F) a sulfur-containing compound wherein at least one hydrocarbon group being adjacent to sulfur is a secondary or tertiary hydrocarbon group, and
as an optional component, (G) a polymer of $\alpha$-olefin having 3 to 6 carbon atoms,
having a kinematic viscosity at 40°C of 450 to 51,000 $mm^2/s$, and
having a sulfur content of 0.1 to 5 parts by weight (with the proviso that the total amount of the lubrication oil composition is 100 parts by weight):
(Method ($\alpha$))
a method ($\alpha$) for producing a liquid random copolymer of ethylene and an $\alpha$-olefin comprising a step of performing solution polymerization of ethylene and an $\alpha$-olefin having 3 to 20 carbon atoms in a catalyst system comprising

(a) a bridged metallocene compound represented by the Formula 1 below, and
(b) at least one compound selected from the group consisting of

(i) organoaluminumoxy compounds, and
(ii) compounds that react with the bridged metallocene compounds to form ion pairs:

[Chem. 1]

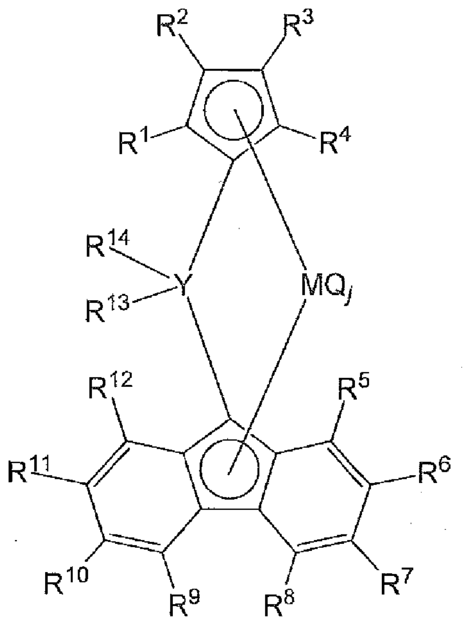

... (Formula 1)

[wherein $R^1$, $R^2$, $R^3$, $R^4$, $R^5$, $R^8$, $R^9$, and $R^{12}$ are respectively and independently a hydrogen atom, a hydrocarbon group, or a silicon-containing hydrocarbon group, and adjacent groups may be linked to each other to form a ring structure,

$R^6$ and $R^{11}$, being identical with each other, are hydrogen atoms, hydrocarbon groups, or silicon-containing hydrocarbon groups,
$R^7$ and $R^{10}$, being identical with each other, are hydrogen atoms, hydrocarbon groups, or silicon-containing hydrocarbon groups,
$R^6$ and $R^7$ may bind to hydrocarbon having 2 to 3 carbon atoms to form a ring structure,
$R^{11}$ and $R^{10}$ may bind to hydrocarbon having 2 to 3 carbon atoms to form a ring structure,
$R^6$, $R^7$, $R^{10}$, and $R^{11}$ are not hydrogen atoms simultaneously,
Y is a carbon atom or a silicon atom,
$R^{13}$ and $R^{14}$ are independently aryl groups,
M is Ti, Zr, or Hf,
Q is independently a halogen, a hydrocarbon group, an anionic ligand, or a neutral ligand that is capable of coordinating to a lone electron pair, and
j is an integer of 1 to 4].

**2.** The lubrication oil composition according to claim 1, wherein in the metallocene compound represented by the above Formula 1, at least one among substituents ($R^1$, $R^2$, $R^3$ and $R^4$) bonded to a cyclopentadienyl group, is a hydrocarbon group having 4 or more carbon atoms.

**3.** The lubrication oil composition according to claim 1 or 2, wherein $R^6$ and $R^{11}$, being the same, are hydrocarbon groups having 1 to 20 carbon atoms.

**4.** The lubrication oil composition according to any one of claims 1 to 3, wherein in the metallocene compound represented by the above Formula 1, a substituent ($R^2$ or $R^3$) bonded to the 3-position of the cyclopentadienyl group is a hydrocarbon group.

**5.** The lubrication oil composition according to claim 4, wherein in the metallocene compound represented by the above Formula 1, a hydrocarbon group ($R^2$ or $R^3$) bonded to the 3-position of the cyclopentadienyl group is an n-butyl group.

**6.** The lubrication oil composition according to any one of claims 1 to 5, wherein in the metallocene compound represented by the above Formula 1, substituents ($R^6$ and $R^{11}$) bonded to the 2-position and 7-position of the fluorenyl

group are all tert-butyl groups.

**7.** The lubrication oil composition according to any one of claims 1 to 6, wherein the compound which reacts with the bridged metallocene compound to form ion pairs is a compound represented by the following Formula 6:

[Chem. 2]

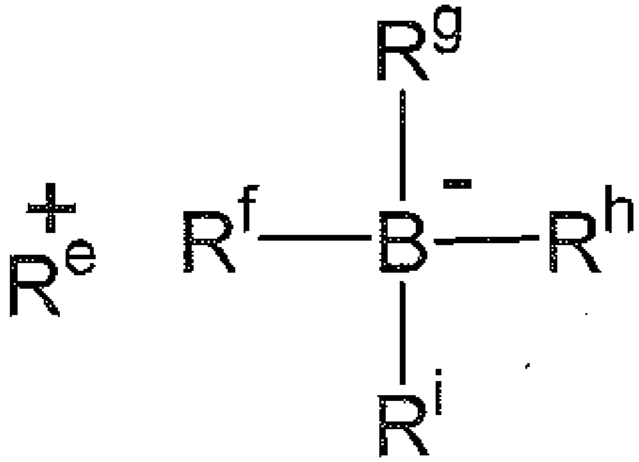

··· (Formula 6)

[wherein $R^{e+}$ is $H^+$, a carbenium cation, an oxonium cation, an ammonium cation, a phosphonium cation, a cycloheptyltrienyl cation, or a ferrocenium cation having a transition metal, and $R^f$ to $R^i$ are respectively and independently a hydrocarbon group having 1 to 20 carbon atoms].

**8.** The lubrication oil composition according to claim 7, wherein the ammonium cation is a dimethylanilinium cation.

**9.** The lubrication oil composition according to claim 7 or 8, wherein the catalyst system further comprises an organoaluminum compound selected from a group consisting of trimethyl aluminum and triisobutyl aluminum.

**10.** The lubrication oil composition according to claim 1, further comprising a component (B) satisfying all of the following requirements (B-1) to (B-3):

(B-1) a kinematic viscosity at 100°C is 3 to 120 $mm^2/s$,
(B-2) a viscosity index is not less than 90, and
(B-3) a pour point is not higher than -10°C.

**11.** The lubrication oil composition according to claim 10, wherein the component (B) is synthetic oil (C) satisfying all of the following requirements (C-1) to (C-3):

(C-1) a kinematic viscosity at 100°C is 20 to 120 $mm^2/s$,
(C-2) a viscosity index is not less than 120, and
(C-3) a pour point is not higher than -30°C.

**12.** The lubrication oil composition according to claim 10, wherein the component (B) is synthetic oil (D) satisfying all of the following requirements (D-1) to (D-3):

(D-1) a kinematic viscosity at 100°C is 3 to 10 $mm^2/s$,
(D-2) a viscosity index is not less than 120, and
(D-3) a pour point is not higher than -40°C.

**13.** The lubrication oil composition according to claim 10, wherein the component (B) is mineral oil (E) satisfying all of the following requirements (E-1) to (E-3):

(E-1) a kinematic viscosity at 100°C is 3 to 40 $mm^2/s$,
(E-2) a viscosity index is not less than 90, and
(E-3) a pour point is not higher than -10°C.

**14.** The lubrication oil composition according to claim 11 or 12, wherein the component (C) and/or the component (D) is synthetic oil comprising a polymer of $\alpha$-olefin having 8 to 20 carbon atoms and/or an ester compound.

**15.** The lubrication oil composition according to claim 13, wherein the component (E) is one or more mineral oils selected from Groups (I), (II) and (III) of the API classification.

**16.** The lubrication oil composition according to any one of claims 1 to 9, wherein the component (B) is one or more selected from synthetic oil (C) satisfying all of the following requirements (C-1) to (C-3), synthetic oil (D) satisfying all of the following requirements (D-1) to (D-3), and mineral oil (E) satisfying all of the following requirements (E-1) to (E-3), and
the saturated hydrocarbon content relative to the entirety of the components (A) to (E) is not less than 80% by weight:

(C-1) a kinematic viscosity at 100°C is 20 to 120 $mm^2/s$,
(C-2) a viscosity index is not less than 120,
(C-3) a pour point is not higher than -30°C
(D-1) a kinematic viscosity at 100°C is 3 to 10 $mm^2/s$,
(D-2) a viscosity index is not less than 120,
(D-3) a pour point is not higher than -40°C
(E-1) a kinematic viscosity at 100°C is 3 to 40 $mm^2/s$,
(E-2) a viscosity index is not less than 90, and
(E-3) a pour point is not higher than -10°C.

**17.** A lubrication oil composition comprising:
a liquid random copolymer of ethylene and an $\alpha$-olefin satisfying all of the following requirements (A-1) to (A-5):

(A-1) comprising 40 to 60% by mol of an ethylene unit, and 60 to 40% by mol of an $\alpha$-olefin unit having 3 to 20 carbon atoms,
(A-2) having a number average molecular weight (Mn) measured by gel permeation chromatography (GPC) of 500 to 10,000, and a molecular weight distribution (Mw/Mn, Mw means a weight average molecular weight) of 3 or less,
(A-3) having a kinematic viscosity at 100°C of 30 to 5,000 $mm^2/s$,
(A-4) having a pour point of 30 to -45°C, and
(A-5) having a bromine value of not higher than 0.1 g/100 g,
(F) a sulfur-containing compound in which at least one hydrocarbon group adjacent to sulfur is a secondary or tertiary hydrocarbon group, and
as an optional component, (G) a polymer of $\alpha$-olefin having 3 to 6 carbon atoms,
and having a kinematic viscosity at 40°C of 450 to 51,000 $mm^2/s$, and
a sulfur content of 0.1 to 5 parts by weight
(with the proviso that the total amount of the lubrication oil composition is 100 parts by weight).

**18.** The lubrication oil composition according to any one of claims 1 to 17, which is a gear oil composition.

**19.** A method for producing a lubrication oil composition comprising:

a step of producing (A) a liquid random copolymer of ethylene and an $\alpha$-olefin by a method ($\alpha$) below, and
a step of mixing (A) the liquid random copolymer, (F) a sulfur-containing compound in which at least one hydrocarbon group adjacent to sulfur is a secondary or tertiary hydrocarbon group, and as an optional component, (G) a polymer of $\alpha$-olefin having 3 to 6 carbon atoms to give a lubrication oil composition having a kinematic viscosity at 40°C of 450 to 51,000 $mm^2/s$ and a sulfur content of 0.1 to 5 parts by weight:

(Method ($\alpha$))
a method ($\alpha$) for producing a liquid random copolymer of ethylene and an $\alpha$-olefin, comprising a step of performing solution polymerization of ethylene and an $\alpha$-olefin having 3 to 20 carbon atoms in a catalyst system comprising

(a) a bridged metallocene compound represented by the Formula 1 below, and
(b) at least one compound selected from the group consisting of

(i) organoaluminumoxy compounds, and
(ii) compounds that react with the bridged metallocene compounds to form ion pairs:

[Chem. 3]

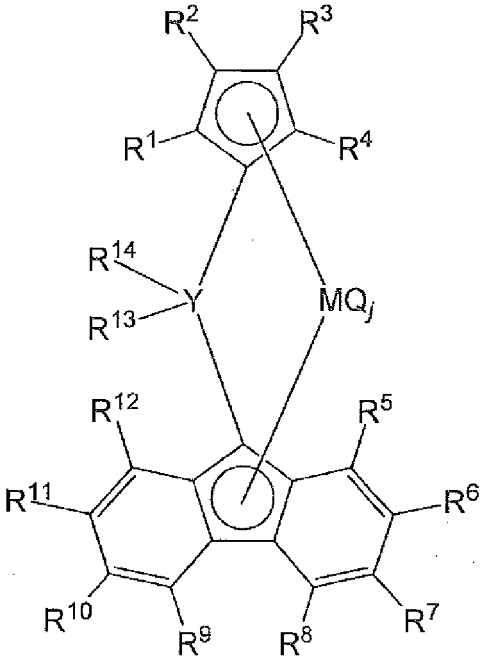

… (Formula 1)

[wherein $R^1$, $R^2$, $R^3$, $R^4$, $R^5$, $R^8$, $R^9$, and $R^{12}$ are respectively and independently a hydrogen atom, a hydrocarbon group, or a silicon-containing hydrocarbon group, and adjacent groups may be linked to each other to form a ring structure,

$R^6$ and $R^{11}$, being identical with each other, are hydrogen atoms, hydrocarbon groups, or silicon-containing hydrocarbon groups,
$R^7$ and $R^{10}$, being identical with each other, are hydrogen atoms, hydrocarbon groups, or silicon-containing hydrocarbon groups,
$R^6$ and $R^7$ may bind to hydrocarbon having 2 to 3 carbon atoms to form a ring structure,
$R^{11}$ and $R^{10}$ may bind to hydrocarbon having 2 to 3 carbon atoms to form a ring structure,
$R^6$, $R^7$, $R^{10}$, and $R^{11}$ are not hydrogen atoms simultaneously,
Y is a carbon atom or a silicon atom,
$R^{13}$ and $R^{14}$ are independently aryl groups,
M is Ti, Zr, or Hf,
Q is independently a halogen, a hydrocarbon group, an anionic ligand, or a neutral ligand that is capable of coordinating to a lone electron pair, and
j is an integer of 1 to 4].

**INTERNATIONAL SEARCH REPORT**

International application No.
PCT/JP2019/012997

A. CLASSIFICATION OF SUBJECT MATTER
Int.Cl. C10M107/02(2006.01)i, C10M161/00(2006.01)i, C10M169/04(2006.01)i, C10M101/02(2006.01)n, C10M105/32(2006.01)n, C10M135/20(2006.01)n, C10M143/00(2006.01)n, C10N20/00(2006.01)n, C10N20/02(2006.01)n, C10N30/02(2006.01)n, C10N30/06(2006.01)n, C10N40/04(2006.01)n
According to International Patent Classification (IPC) or to both national classification and IPC

B. FIELDS SEARCHED
Minimum documentation searched (classification system followed by classification symbols)
Int.Cl. C10M107/02, C10M161/00, C10M169/04, C10M101/02, C10M105/32, C10M135/20, C10M143/00, C10N20/00, C10N20/02, C10N30/02, C10N30/06, C10N40/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2016-069406 A (MITSUI CHEMICALS, INC.) 09 May 2016, claims, paragraphs [0017]-[0032], [0051]-[0133], [0136], [0137], [0148]-[0150], examples (Family: none) | 1-4, 6-19<br>1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03.06.2019 | 11.06.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/012997

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2013/154005 A1 (MITSUI CHEMICALS, INC.) 17 October 2013, claims, paragraph [0024], examples & US 2015/0080280 A1, claims, paragraph [0056], examples & EP 2837676 A1 & CN 104245905 A | 1-19 |
| Y | JP 2016-188318 A (MITSUI CHEMICALS, INC.) 04 November 2016, paragraphs [0232], [0233] (Family: none) | 1-16, 18-19 |
| Y | US 2009/0088543 A1 (YANG et al.) 02 April 2009, claims & WO 2009/045301 A2 & EP 2201047 A2 & CN 102015781 A & KR 10-2010-0072226 A | 1-16, 18-19 |
| A | WO 2015/147215 A1 (MITSUI CHEMICALS, INC.) 01 October 2015, claims, examples & US 2017/0114166 A1, claims, examples & US 2018/0273662 A1 & EP 3124505 A1 & KR 10-2016-0121566 A & CN 106133006 A | 1-19 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0034420 A
- US 4960878 A
- US 5041584 A
- KR 10551147
- JP H01501950 A
- JP H03179005 A
- JP H03179006 A
- JP H03207703 A
- JP H03207704 A
- US 5321106 A
- JP 2004051676 A
- US 3909432 A


### Non-patent literature cited in the description


- **TOSOH FINECHEM CORPORATION.** *Tosoh Research & Technology Review,* 2003, vol. 47, 55